# EUROPEAN PATENT APPLICATION

(11) **EP 3 089 521 A1**
(43) Date of publication of application: **02.11.2016**
(21) Application number: 14874439.4
(22) Date of filing: 25.12.2014
(51) Int. Cl.: H04W 52/02

(54) **METHOD, DEVICE AND SYSTEM FOR INTERFERENCE CONTROL FOR RANDOM ACCESS**

(30) Priority: 26.12.2013 CN 201310731509
(71) Applicant: Huawei Technologies Co., Ltd., Longgang District Shenzhen, Guangdong 518129 (CN)
(72) Inventor: ZHOU, Han, Shenzhen Guangdong 518129 (CN); HUA, Meng, Shenzhen Guangdong 518129 (CN); TIE, Xiaolei, Shenzhen Guangdong 518129 (CN)
(74) Representative: Pfenning, Meinig & Partner mbB
(86) International application number: PCT/CN2014/094955
(87) International publication number: WO 2015/096775

(57) **Abstract**

The present invention belongs to the field of communications technologies, and discloses an interference control method for random access, device, and system. The method includes: acquiring a primary scrambling code of a random access preamble broadcast by a radio network control device; acquiring a random access preamble sent by user equipment UE; identifying, according to the primary scrambling code of the broadcast random access preamble and the random access preamble that is sent by the UE, that the UE is UE that camps on the first base station; and delivering an acquisition indication channel to the UE, to indicate whether the UE can perform uplink access. In the present invention, a second base station of a neighboring cell of a first base station delivers an acquisition indication channel to the UE, to indicate that the UE performs uplink access to the second base station. Therefore, the UE no longer needs to receive an acquisition indication channel AICH of the first base station where the UE is located, and does not need to continue sending a random access preamble to the first base station, so that uplink interference to the second base station by random access of the UE is suppressed, an uplink throughput of the second base station is increased, and at the same time transmit power of the UE can also be saved.

## Description

### TECHNICAL FIELD

The present invention relates to the field of communications technologies, and in particular, to an interference control method for random access, device, and system.

### BACKGROUND

In the 3GPP (The 3rd Generation Partnership Project, The 3rd Generation Partnership Project) project, a HetNet (Heterogeneous Network, heterogeneous network) technology is introduced in a UMTS R12 (Universal Mobile Telecommunications System, Universal Mobile Telecommunications System). A HetNet is a multi-layer networking radio access network technology. Compared with a conventional radio access network, in the HetNet, one or more micro network layers are added on the basis of a macro network layer, and a base station in a micro network is also referred to as a micro station or an LPN (Low Power Node, low power node). Compared with capacity expansion of a single macro network, a heterogeneous network has advantages such as a low cost and easy deployment and maintenance, and is a popular topic in current researches of wireless telecommunication. However, rated transmit powers of a macro station and the micro station in the HetNet are different, which causes an interference problem in a process of random access to a RACH (Random Access Channel, random access channel): In the HetNet, for UE that camps on the macro station, if RACH ramping (power ramping) access is performed, a preamble (random access preamble) sent by the UE causes burst interference to the micro station. Due to the burst interference, uplink data transmitted by UE in the micro station cannot be correctly received by the base station, causing instantaneous error blocks, which affects a throughput of the micro station. Furthermore, an RNC (Radio Network Controller, radio network controller) increases SIRtarget (target signal-to-interference ratio) of UEs in a micro cell in outer-loop power control due to influence by these error blocks, so that these UEs can increase an uplink transmit power to reduce the influence by interference. Increase of the powers of the UEs causes an increase in a RoT (thermal noise level) of the micro station, which affects an uplink capacity of the micro station. Therefore, during random access, interference needs to be controlled.

In an interference control method for random access in the prior art, a macro station informs a micro station of a preamble primary scrambling code that is broadcast in PRACH info (PRACH information) and PRACH preamble control parameters (PRACH preamble control parameters) of a current cell. The micro station tries to decode a preamble of UE (user equipment, user equipment) of the macro station, and performs interference cancellation on the preamble sent by the UE of the macro station. After decoding the preamble, the micro station may identify, according to a timing relationship, burst interference caused by a message part (message part) of a RACH (Random Access Channel, random access channel), and notify an RNC to eliminate, in outer-loop power control, influence of an error block caused by the preamble and the message, thereby avoiding increase, in uplink transmit powers of UEs, caused by the outer-loop power control. Alternatively, the macro station directly reports RACH UEs to the RNC, and the RNC eliminates, in the outer-loop power control, an error block caused by interference from these UEs.

During the implementation of the present invention, the inventors find that the prior art has at least the following problems:

In the prior art, only how to eliminate influence on outer-loop power control from burst interference caused by RACH UE is resolved, while interference is not suppressed and influence on a throughput caused by burst interference is not resolved.

### SUMMARY

To resolve the problem in the prior art, embodiments of the present invention provide an interference control method for random access, a device, and a system. The technical solutions are as follows:

According to a first aspect, an interference control method for random access is provided, the method including: acquiring a primary scrambling code of a random access preamble broadcast by a radio network control device; acquiring a random access preamble sent by user equipment UE; identifying, according to the primary scrambling code of the broadcast random access preamble and the random access preamble that is sent by the UE, that the UE is UE that camps on a first base station that serves a neighboring cellfirst base station that serves a neighboring cell; and delivering an acquisition indication channel to the UE, to indicate whether the UE can perform uplink access.

With reference to the first aspect, in a first possible implementation manner of the first aspect, before the acquiring a random access preamble sent by user equipment UE, the method further includes: receiving the random access preamble sent by the UE.

With reference to the first possible implementation manner of the first aspect, in a second possible implementation manner of the first aspect, the delivering an acquisition indication channel to the UE, to indicate that the UE can perform uplink access includes: sending the acquisition indication channel to the UE, where a slot format of the acquisition indication channel includes an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether to allow the UE to perform uplink access.

With reference to the first aspect, in a third possible implementation manner of the first aspect, before the acquiring a random access preamble sent by user equipment UE, the method further includes: receiving the random access preamble sent by the UE; or listening to a random access preamble sent by the UE to the first base station.

With reference to the third possible implementation manner of the first aspect, in a fourth possible implementation manner of the first aspect, the delivering an acquisition indication channel to the UE, to indicate whether the UE can perform uplink access includes: estimating a remaining resource; and if there is a remaining resource, delivering the acquisition indication channel to the UE, where a slot structure of the acquisition indication channel includes an AI part, and a parameter value indicating whether to allow the UE to perform uplink access is set in the AI part, so that when being allowed to perform uplink access, the UE sends a random access message.

With reference to any one of the first to fourth possible implementation manners of the first aspect, in a fifth possible implementation manner of the first aspect, the delivering an acquisition indication channel to the UE includes: repeatedly sending the acquisition indication channel by using multiple slots or transmission time intervals.

With reference to any one of the first to fifth possible implementation manners of the first aspect, in a sixth possible implementation manner of the first aspect, the method further includes: receiving the random access message sent by the UE; and forwarding the random access message to a radio network controller, so that the radio network controller controls the first base station to send a forward import access channel or a high-speed downlink shared channel to the UE.

With reference to the sixth possible implementation manner of the first aspect, in a seventh possible implementation manner of the first aspect, the forwarding the random access message to a radio network controller includes: identifying the random access message, and if the first base station is a sending target of the random access message, sending an uplink to the radio network controller according to the random access message.

With reference to the seventh possible implementation manner of the first aspect, in an eighth possible implementation manner of the first aspect, the identifying the random access message includes: performing distinguishing according to a scrambling code used in the random access message sent by the UE, and determining the sending target of the random access message sent by the UE; or determining the sending target of the random access message according to indication information added to a control part of the random access message sent by the UE.

According to a second aspect, an interference control method for random access is provided, the method including: sending a random access preamble, so that a second base station of a neighboring cell acquires the random access preamble, where the second base station is a base station of a neighboring cell of a cell of a first base station on which the UE camps; receiving an acquisition indication channel delivered by the second base station; and determining, according to an indication of the acquisition indication channel delivered by the second base station, whether the second base station allows uplink access to the second base station, and if uplink access to the second base station is allowed, sending a random access message to the second base station.

With reference to the second aspect, in a first possible implementation manner of the second aspect, before the sending a random access preamble, the method further includes: receiving a preamble signature sequence, a scrambling code, and an acquisition indication channel code channel of the second base station that are broadcast by a radio network controller, acquiring that a configuration of the first base station of the UE is that the UE is allowed to perform uplink access to the second base station; detecting that downlink channel quality of the second base station is greater than an uplink access threshold; and the sending a random access preamble, so that a second base station acquires the random access preamble includes: sending the random access preamble to the second base station by using the broadcast preamble signature sequence and scrambling code of the second base station, so that the second base station decodes the random access preamble, and identifies, according to a signature sequence of the random access preamble, that the UE is UE that camps on the first base station, so as to deliver the acquisition indication channel to the UE.

With reference to the first possible implementation manner of the second aspect, in a second possible implementation manner of the second aspect, the detecting that downlink channel quality of the second base station is greater than an uplink access threshold includes: acquiring related parameters, where the related parameters include M__{new}, CIO_{new}, M_{best}, and R_{RACH}; and determining, according to the related parameters, whether a formula 10logM__{new}+CIO_{new}≥10logM_{best}+R_{RACH} is true, and if the formula is true, confirming that it is detected that the downlink channel quality of the second base station is greater than the uplink access threshold, where 10logM__{new} is the downlink channel quality of the second base station; M__{new} is one or a combination of more of the following second base station parameters: a common pilot channel received signal code power CPICH_RSCP, a chip power noise ratio Ec/N0, channel quality of a control channel, and channel quality of a synchronization channel; CIO__{new} is a measurement value offset of a cell of the second base station; M__{best} is channel quality of the cell of the first base station; and R_{RACH} is a measurement report range.

With reference to the second aspect or the first or second possible implementation manner of the second aspect, in a third possible implementation manner of the second aspect, the determining, according to an indication of the acquisition indication channel delivered by the second base station, whether the second base station allows uplink access includes: detecting that a signature sequence of the acquisition indication channel delivered by the second base station corresponds to the signature sequence of the random access preamble, decoding the signature sequence of the acquisition indication channel, and determining, according to a decoding result, whether the second base station allows uplink access.

With reference to the second aspect or any one of the first to third possible implementation manners of the second aspect, in a fourth possible implementation manner of the second aspect, the sending a random access message to the second base station includes: sending the random access message to the second base station by using the scrambling code and a spreading code of the second base station, where the spreading code is agreed upon in advance or acquired through broadcasting.

With reference to the second aspect, in a fifth possible implementation manner of the second aspect, before the sending a random access preamble, the method further includes: receiving a scrambling code and an acquisition indication channel code channel of the second base station that are broadcast by a radio network controller, and acquiring that a configuration of the first base station of the UE is that the UE is allowed to receive, within the time of receiving an acquisition indication channel delivered by the first base station, the acquisition indication channel delivered by the second base station; and the sending a random access preamble includes: sending a random access preamble to the first base station or the second base station, so that the second base station acquires the random access preamble.

With reference to the fifth possible implementation manner of the second aspect, in a sixth possible implementation manner of the second aspect, the determining, according to an indication of the acquisition indication channel delivered by the second base station, whether the second base station allows uplink access includes: detecting a parameter value that is set in an acquisition indicator AI part of the acquisition indication channel delivered by the second base station and that is used to indicate whether the UE is allowed to perform random access, and determining, according to the parameter value, whether the second base station allows uplink access.

With reference to the fifth or sixth possible implementation manner of the second aspect, in a seventh possible implementation manner of the second aspect, before the sending a random access message to the second base station, the method further includes: determining whether the acquisition indication channel of the first base station is received; and if yes, sending the random access message to the first base station.

With reference to the second aspect or any one of the first to seventh possible implementation manners of the second aspect, in an eighth possible implementation manner of the second aspect, the method further includes: receiving a forward import access channel or a high-speed downlink shared channel sent by the first base station.

With reference to the second aspect or any one of the first to eighth possible implementation manners of the second aspect, in a ninth possible implementation manner of the second aspect, the random access message is scrambled by using the scrambling code of the first base station or the second base station, so that when receiving the random access message, the second base station or the first base station identifies whether the random access message needs to be forwarded to the radio network controller; or indication information is set in a control part of the random access message, so that when receiving the random access message, the second base station or the first base station identifies whether the random access message needs to be forwarded to the radio network controller.

According to a third aspect, an interference control method for random access is provided, the method including: configuring that user equipment UE is allowed to perform uplink access to a second base station or UE is allowed to receive, within time of receiving an acquisition indication channel delivered by a first base station, an acquisition indication channel delivered by a second base station, where the first base station is a base station on which the UE camps, and the second base station is a base station of a neighboring cell of a cell of the first base station; broadcasting, to the UE according to a configuration, related information of random access to the second base station, so that the UE enters a random access procedure according to the related information of random access; and sending, to the second base station according to the configuration, a primary scrambling code of a random access preamble broadcast by the first base station, so that after acquiring a random access preamble sent by the UE, the second base station decodes the random access preamble according to the primary scrambling code, and sends the acquisition indication channel to the UE, to indicate whether the UE is allowed to perform random access.

With reference to the third aspect, in a first possible implementation manner of the third aspect, when the configuration is that the user equipment UE of the first base station is allowed to perform random access to the second base station, the related information of random access includes: a preamble signature sequence, a scrambling code, and an acquisition indication channel code channel of the second base station, where the preamble signature sequence is different from a preamble signature sequence for random access of UE that camps on the second base station; or when the configuration is that the UE is allowed to receive, within the time of receiving the acquisition indication channel delivered by the first base station, the acquisition indication channel delivered by the second base station, the related information of random access includes: a scrambling code and an acquisition indication channel code channel of the second base station.

With reference to the third aspect or the first possible implementation manner of the third aspect, in a second possible implementation manner of the third aspect, the method further includes: receiving a random access message forwarded by the second base station and/or the first base station; and instructing, according to the random access message, the first base station to send a forward import access channel or a high-speed downlink shared channel to the UE.

With reference to the second possible implementation manner of the third aspect, in a third possible implementation manner of the third aspect, after the receiving a random access message forwarded by the second base station and the first base station, the method further includes: performing selective combination on the random access message.

According to a fourth aspect, a base station is provided, including: a broadcast receiving unit, configured to acquire a primary scrambling code of a random access preamble broadcast by a radio network control device; a preamble acquiring unit, configured to acquire a random access preamble sent by user equipment UE; an identification unit, configured to identify, according to the primary scrambling code of the broadcast random access preamble and the random access preamble that is sent by the UE, whether the UE is UE that camps on a first base station that serves a neighboring cellfirst base station that serves a neighboring cell; and a channel sending unit, configured to: when the identification unit identifies that the UE is UE that camps on the first base station, deliver an acquisition indication channel to the UE, to indicate whether the UE can perform uplink access.

With reference to the fourth aspect, in a first possible implementation manner of the fourth aspect, the preamble acquiring unit is acquisition configured to receive the random access preamble sent by the UE, where a slot format of the acquisition indication channel sent by the channel sending unit includes an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

With reference to the first possible implementation manner of the fourth aspect, in a second possible implementation manner of the fourth aspect, the preamble acquiring unit is acquisition configured to listen to a random access preamble sent by the UE to the first base station; and the channel sending unit includes: a resource estimation module, configured to: after the preamble acquiring unit listens and obtains the random access preamble, estimate whether the base station has a remaining resource; and a channel processing module, configured to: when the resource estimation module estimates that the base station has a remaining resource, send the acquisition indication channel to the UE, where a slot of the acquisition indication channel includes an AI part and a pilot Pilot part, and a parameter value indicating whether the UE is allowed to perform random access is set in the AI part, so that when being allowed to perform random access, the UE sends a random access message, where the Pilot part is used for the UE to perform channel evaluation on the acquisition indication channel; or further configured to repeatedly send the acquisition indication channel by using multiple slots or transmission time intervals TTI, so as to increase a correct reception probability of the UE.

With reference to the fourth aspect or the first or second possible implementation manner of the fourth aspect, in a third possible implementation manner of the fourth aspect, the base station further includes: an access message receiving unit, configured to receive the random access message sent by the UE; and a forwarding unit, configured to forward the random access message to a radio network controller, so that the radio network controller controls the first base station to send a related channel to the UE.

With reference to the third possible implementation manner of the fourth aspect, in a fourth possible implementation manner of the fourth aspect, the forwarding unit is further configured to identify the random access message, and if the random access message is sent to the base station, forward the random access message to the radio network controller.

According to a fifth aspect, user equipment is provided, including: a preamble sending unit, configured to send a random access preamble, so that a second base station acquires the random access preamble, where the second base station is a base station of a neighboring cell of a cell of a first base station on which the UE camps; an uplink channel receiving unit, configured to receive an acquisition indication channel delivered by the second base station; and an access message sending unit, configured to determine, according to the acquisition indication channel received by the uplink channel receiving unit, whether the second base station allows uplink access, and if uplink access is allowed, send a random access message to the second base station.

With reference to the fifth aspect, in a first possible implementation manner of the fifth aspect, the user equipment further includes: a broadcast receiving unit, configured to receive a preamble signature sequence, a scrambling code, and an acquisition indication channel code channel of the second base station that are broadcast by a radio network controller, and acquire that a configuration of the first base station of the UE is that the UE is allowed to perform uplink access to the second base station; and a threshold detection unit, configured to: when the broadcast receiving unit acquires that the configuration of the first base station is that the UE is allowed to perform uplink access to the second base station, detect whether downlink channel quality of the second base station is greater than an uplink access threshold, where the preamble sending unit is configured to: send a random access preamble, including, when the threshold detection unit detects that the downlink channel quality of the second base station is greater than the uplink access threshold, send the random access preamble to the second base station by using the broadcast preamble signature sequence and scrambling code of the second base station, so that the second base station decodes the random access preamble, and identifies, according to a signature sequence of the random access preamble, that the UE is UE that camps on a neighboring cell, so as to deliver the acquisition indication channel to the UE.

With reference to the first possible implementation manner of the fifth aspect, in a second possible implementation manner of the fifth aspect, the access message sending unit includes: a channel analysis module, configured to detect the acquisition indication channel received by the uplink channel receiving unit, and when it is detected that a signature sequence of the acquisition indication channel corresponds to the signature sequence of the random access preamble, decode the signature sequence of the acquisition indication channel, and determine, according to a decoding result, whether the second base station allows uplink access; and a sending module, configured to: when the channel analysis module determines that the second base station allows uplink access, send the random access message to the second base station.

With reference to the fifth aspect, in a third possible implementation manner of the fifth aspect, the user equipment further includes: a broadcast receiving unit, configured to receive a scrambling code and an acquisition indication channel of the second base station that are broadcast by a radio network controller, and acquire that a configuration of the first base station of the UE is that the UE is allowed to receive, within time of receiving an acquisition indication channel delivered by the first base station, the acquisition indication channel delivered by the second base station, where the preamble sending unit is configured to send the random access preamble, so that the second base station acquires the random access preamble.

With reference to the fifth aspect or the third possible implementation manner of the fifth aspect, in a fourth possible implementation manner of the fifth aspect, the access message sending unit includes: a channel analysis module, configured to detect a parameter value that is set in an acquisition indicator AI part of the acquisition indication channel received by the uplink channel receiving unit and that is used to indicate whether uplink access is allowed, and determine, according to the parameter value, whether the second base station allows uplink access; and a sending module, configured to: when the channel analysis module determines that the second base station allows uplink access, send the random access message to the second base station.

With reference to the third or fourth possible implementation manner of the fifth aspect, in a fifth possible implementation manner of the fifth aspect, the uplink channel receiving unit is further configured to receive the acquisition indication channel delivered by the first base station; and the access message sending unit is further configured to: when the uplink channel receiving unit synchronously receives the acquisition indication channel delivered by the second base station and the acquisition indication channel delivered by the first base station, send the random access message to the first base station.

With reference to any one of the third to fifth possible implementation manners of the fifth aspect, in a sixth possible implementation manner of the fifth aspect, the access message sending unit is further configured to scramble the random access message by using the scrambling code of the first base station or the second base station, so that when receiving the random access message, the second base station or the first base station identifies whether the random access message needs to be forwarded to the radio network controller; or is further configured to set indication information in a control part of the random access message, so that when receiving the random access message, the second base station or the first base station identifies whether the random access message needs to be forwarded to the radio network controller.

With reference to the fifth aspect or any one of the first to sixth possible implementation manners of the fifth aspect, in a seventh possible implementation manner of the fifth aspect, the user equipment further includes: a downlink channel receiving unit, configured to receive a forward import access channel or a high-speed downlink shared channel sent by the first base station.

According to a sixth aspect, a radio network control device is provided, including: a configuration unit, configured to configure that user equipment UE performs uplink access to a second base station, or configured to configure that UE is allowed to receive, within time of receiving an acquisition indication channel delivered by a first base station, an acquisition indication channel delivered by a second base station, where the first base station is a base station on which the UE camps, and the second base station is a base station of a neighboring cell of a cell of the first base station; and a broadcasting unit, configured to broadcast, to the UE according to a configuration of the configuration unit, related information of random access to the second base station, so that the UE acquires the configuration, and enters a random access procedure according to the related information of random access; and is further configured to send, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

With reference to the sixth aspect, in a first possible implementation manner of the sixth aspect, when the configuration is that the user equipment UE of the first base station is allowed to perform random access to the second base station, the broadcasting unit is configured to broadcast a preamble signature sequence, a scrambling code, and the acquisition indication channel of the second base station to the UE, where the preamble signature sequence is different from a preamble signature sequence for random access of UE that camps on the second base station; or when the configuration is that the UE is allowed to receive, within the time of receiving the acquisition indication channel delivered by the first base station, the acquisition indication channel delivered by the second base station, the broadcasting unit is configured to broadcast a scrambling code and an acquisition indication channel code channel of the second base station to the UE.

With reference to the sixth aspect or the first possible implementation manner of the sixth aspect, in a second possible implementation manner of the sixth aspect, the radio network control device further includes: a receiving unit, configured to receive a random access message forwarded by the second base station and/or the first base station; and an instruction unit, configured to instruct, according to the random access message, the first base station to send a forward import access channel or a high-speed downlink shared channel to the UE.

With reference to the second possible implementation manner of the sixth aspect, in a third possible implementation manner of the sixth aspect, the radio network control device further includes: a selective combination unit, configured to: when the receiving unit receives the random access message forwarded by the second base station and the first base station, perform selective combination on the random access message received by the receiving unit.

According to a seventh aspect, a random access system is provided, including: the base station according to any one of the implementation manners provided in the fourth aspect; the user equipment UE that camps on a base station of a neighboring cell of a cell of the base station according to any one of the implementation manners provided in the fifth aspect; and the radio network controller according to any one of the implementation manners provided in the sixth aspect, where the base station on which the UE camps on is configured to send the forward import access channel or the high-speed downlink shared channel to the UE according to an indication of the radio network controller.

According to an eighth aspect, a base station is provided, including: a receiver, configured to acquire a primary scrambling code of a random access preamble broadcast by a radio network control device and a random access preamble that is sent by user equipment UE; a processor, configured to identify, according to the primary scrambling code of the broadcast random access preamble and the random access preamble that is sent by the UE, whether the UE is UE that camps on the first base station; and a sender, configured to: when the processor identifies that the UE is UE that camps on the first base station, deliver an acquisition indication channel to the UE, to indicate whether the UE can perform uplink access.

With reference to the eighth aspect, in a first possible implementation manner of the eighth aspect, the receiver is configured to receive the random access preamble sent by the UE, where a slot format of the acquisition indication channel sent by the sender includes an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

With reference to the eighth aspect, in a second possible implementation manner of the eighth aspect, the receiver is configured to listen to a random access preamble sent by the UE to the first base station; the processor is configured to: after the receiver listens and obtains the random access preamble, estimate whether the base station has a remaining resource; and the sender is further configured to: when the processor estimates that the base station has a remaining resource, send the acquisition indication channel to the UE, where a slot of the acquisition indication channel includes an AI part and a pilot Pilot part, and a parameter value indicating whether to allow the UE to perform uplink access is set in the AI part, so that when being allowed to perform uplink access, the UE sends a random access message, where the Pilot part is used for the UE to perform channel evaluation on the acquisition indication channel; or further configured to repeatedly send the acquisition indication channel by using multiple slots or transmission time intervals TTI, so as to increase a correct reception probability of the UE.

With reference to the eighth aspect or the first or second possible implementation manner of the eighth aspect, in a third possible implementation manner of the eighth aspect, the receiver is further configured to receive a random access message sent by the UE; and the sender is further configured to forward the random access message to a radio network controller, so that the radio network controller controls the first base station to send a related channel to the UE.

With reference to the third possible implementation manner of the eighth aspect, in a fourth possible implementation manner of the eighth aspect, the processor is further configured to identify the random access message; and the sender is further configured to: when the processor identifies that the random access message is sent to the base station, forward the random access message to the radio network controller.

According to a ninth aspect, user equipment is provided, including: a sender, configured to send a random access preamble, so that a second base station acquires the random access preamble, where the second base station is a base station of a neighboring cell of a cell of a first base station on which the UE camps; a receiver, configured to receive an acquisition indication channel delivered by the second base station; and a processor, configured to determine, according to the acquisition indication channel received by the receiver, whether the second base station allows uplink access, where the sender is further configured to: when the processor determines that the second base station allows uplink access, send a random access message to the second base station.

With reference to the ninth aspect, in a first possible implementation manner of the ninth aspect, the receiver is configured to receive a preamble signature sequence, a scrambling code, and an acquisition indication channel code channel of the second base station that are broadcast by a radio network controller; the processor is further configured to acquire, according to a preamble signature, the scrambling code, and the acquisition indication channel code channel of the second base station that are received by the receiver, that a configuration of the first base station is that the UE is allowed to perform uplink access to the second base station; and configured to: when it is acquired that the configuration of the first base station is that the UE is allowed to perform uplink access to the second base station, detect whether downlink channel quality of the second base station is greater than an uplink access threshold; and the sender is configured to: when the processor detects that the downlink channel quality of the second base station is greater than the uplink access threshold, send the random access preamble to the second base station by using the broadcast preamble signature sequence and scrambling code of the second base station, so that the second base station decodes the random access preamble, and identifies, according to a signature sequence of the random access preamble, that the UE is UE that camps on a neighboring cell, so as to deliver the acquisition indication channel to the UE.

With reference to the ninth aspect or the first possible implementation manner of the ninth aspect, in a second possible implementation manner of the ninth aspect, the processor is further configured to: when it is detected that a signature sequence of the acquisition indication channel corresponds to the signature sequence of the random access preamble, decode the signature sequence of the acquisition indication channel, and determine, according to a decoding result, whether the second base station allows uplink access; and the sender is further configured to: when the processor determines that the second base station allows uplink access, send the random access message to the second base station.

With reference to the ninth aspect, in a third possible implementation manner of the ninth aspect, the receiver is configured to receive a scrambling code and an acquisition indication channel code channel of the second base station that are broadcast by a radio network controller; the processor is further configured to acquire, according to the scrambling code and the acquisition indication channel code channel of the second base station that are broadcast by the radio network controller and that are received by the receiver, that a configuration of the first base station of the UE is that the UE is allowed to receive, within time of receiving an acquisition indication channel of the first base station, the acquisition indication channel delivered by the second base station; and the sender is configured to send the random access preamble to the first base station or the second base station, so that the second base station acquires the random access preamble.

With reference to the third possible implementation manner of the ninth aspect, in a fourth possible implementation manner of the ninth aspect, the processor is further configured to detect a parameter value that is set in an acquisition indicator AI part of the acquisition indication channel delivered by the second base station and that is used to indicate whether uplink access is allowed, and determine, according to the parameter value, whether the second base station allows uplink access; and the sender is further configured to: when the processor determines that the second base station allows uplink access, send the random access message to the second base station.

With reference to the third or fourth possible implementation manner of the ninth aspect, in a fifth possible implementation manner of the ninth aspect, the receiver is further configured to receive the acquisition indication channel delivered by the first base station; and the processor is further configured to: when the receiver receives the acquisition indication channel delivered by the second base station, determine whether the acquisition indication channel of the first base station is received; and the sender, when the processor determines that the receiver receives the acquisition indication channel of the first base station, ignores the acquisition indication channel delivered by the second base station, and sends the random access message to the first base station.

With reference to any one of the third to fifth possible implementation manners of the ninth aspect, in a sixth possible implementation manner of the ninth aspect, the sender is further configured to scramble the random access message by using the scrambling code of the first base station or the second base station, so that when receiving the random access message, the second base station or the first base station identifies whether the random access message needs to be forwarded to the radio network controller; or is further configured to set indication information in a control part of the random access message, so that when receiving the random access message, the second base station or the first base station identifies whether the random access message needs to be forwarded to the radio network controller.

With reference to the ninth aspect or any one of the first to sixth possible implementation manners of the ninth aspect, in a seventh possible implementation manner of the ninth aspect, the receiver is further configured to receive a forward import access channel or a high-speed downlink shared channel sent by the first base station.

According to a tenth aspect, a radio network control device is provided, including: a processor, configured to configure that user equipment UE is allowed to perform uplink access to a second base station of a neighboring cell, or configured to configure that UE is allowed to receive, within time of receiving an acquisition indication channel delivered by a first base station, an acquisition indication channel delivered by a second base station, where the first base station is a base station on which the UE camps, and the second base station is a base station of a neighboring cell of a cell of the first base station; and a sender, configured to broadcast, to the UE according to a configuration of the processor, related information of random access to the second base station, so that the UE acquires the configuration, and enters a random access procedure according to the related information of random access; and is further configured to send, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

With reference to the tenth aspect, in a first possible implementation manner of the tenth aspect, the sender is configured to: when the configuration is that the user equipment UE of the first base station is allowed to perform random access to the second base station, broadcast a preamble signature sequence, a scrambling code, and an acquisition indication channel code channel of the second base station to the UE, where the preamble signature sequence is different from a preamble signature sequence for random access of UE that camps on the second base station; or the sender is configured to: when the configuration is that the UE of the first base station is allowed to receive, within the time of receiving the acquisition indication channel of the first base station, the acquisition indication channel of the second base station, broadcast a scrambling code and an acquisition indication channel code channel of the second base station to the UE.

With reference to the tenth aspect or the first possible implementation manner of the tenth aspect, in a second possible implementation manner of the tenth aspect, the radio network control device further includes a receiver, where the receiver is configured to receive a random access message forwarded by the second base station and/or the first base station; and the sender is further configured to instruct, according to the random access message, the first base station to send a forward import access channel or a high-speed downlink shared channel to the UE.

With reference to the second possible implementation manner of the tenth aspect, in a third possible implementation manner of the tenth aspect, the processor is further configured to: when the receiver receives the random access message forwarded by the second base station and the first base station, perform, by using a macro diversity manner, selective combination on the random access message received by the receiver.

The technical solutions provided by the embodiments of the present invention have the following beneficial effects:

A first base station on which UE camps is set to allow the UE to perform uplink access to a second base station of a neighboring cell in an uplink or to allow the UE to receive, within time of receiving an acquisition indication channel of the first base station, an acquisition indication channel of a second base station and broadcast a primary scrambling code of a random access preamble to the second base station. Therefore, after acquiring a random access preamble sent by the UE and decoding the random access preamble, the second base station can send the acquisition indication channel to the UE. When the acquisition indication channel delivered by the second base station indicates that the UE is allowed to perform uplink access, the UE can perform uplink access to the second base station, and therefore no longer needs to receive the acquisition indication channel of the first base station of the UE, and does not need to continue sending a random access preamble to the first base station, so that uplink interference to the second base station by the uplink access of the UE is suppressed, an uplink throughput of the second base station is increased, and at the same time transmit power of the UE can also be saved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a scenario in which UE is in a HetNet according to an embodiment of the present invention;
FIG. 2 is a flowchart of an interference control method for random access according to Embodiment 1 of the present invention;
FIG. 3 is a flowchart of an interference control method for random access according to Embodiment 2 of the present invention;
FIG. 4 is a flowchart of an interference control method for random access according to Embodiment 3 of the present invention;
FIG. 5 is a flowchart of an interference control method for random access according to Embodiment 4 of the present invention;
FIG. 6 is a schematic diagram of a slot format of a non-serving AICH in the method according to Embodiment 4 of the present invention;
FIG. 7 is a flowchart of a method of receiving a related channel from a macro station by downlink UE in Embodiment 4 of the present invention;
FIG. 8 is a flowchart of an interference control method for random access according to Embodiment 5 of the present invention;
FIG. 9 is a schematic diagram of a slot format of a non-serving AICH in the method according to Embodiment 5 of the present invention;
FIG. 10 is a flowchart of a method of receiving, by UE within time of receiving a current cell AICH in a RACH process by the UE, a non-serving AICH, of an LPN, broadcast by a macro station in the method according to Embodiment 5 of the present invention;
FIG. 11 is a schematic structural diagram of a base station according to Embodiment 6 of the present invention;
FIG. 12 and FIG. 13 are schematic structural diagrams of user equipment according to Embodiment 7 of the present invention;
FIG. 14 is a schematic structural diagram of user equipment according to Embodiment 8 of the present invention;
FIG. 15 and FIG. 16 are schematic structural diagrams of a radio network control device according to Embodiment 9 of the present invention;
FIG. 17 is a schematic diagram of a random access system according to Embodiment 10 of the present invention;
FIG. 18 is a schematic diagram of a random access system according to Embodiment 11 of the present invention;
FIG. 19 is a schematic structural diagram of a base station according to Embodiment 12 of the present invention;
FIG. 20 is a schematic structural diagram of user equipment according to Embodiment 13 of the present invention; and
FIG. 21 is a schematic structural diagram of a radio network control device according to Embodiment 14 of the present invention.

### DESCRIPTION OF EMBODIMENTS

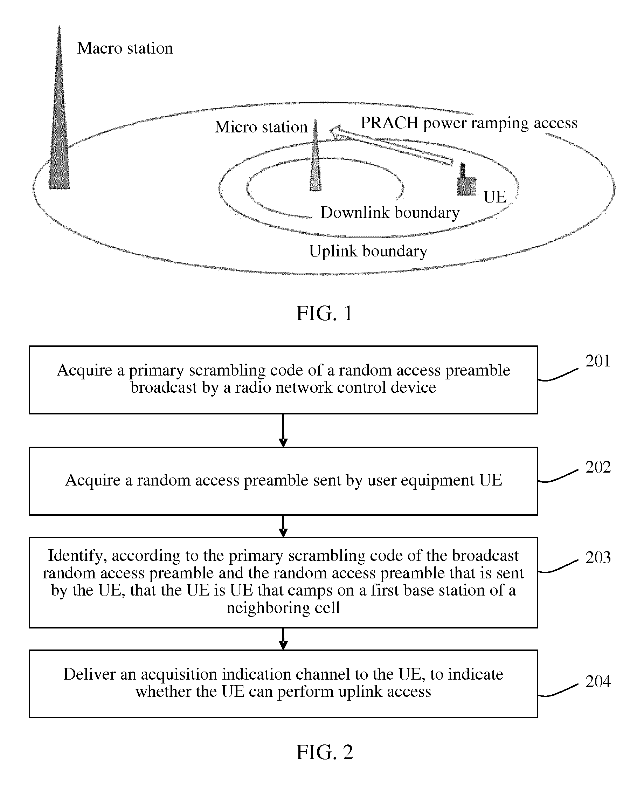

The inventors find through research that in a HetNet, as shown in FIG. 1, RACH ramping access is performed for UE that camps on a first base station, and a preamble sent by the UE causes burst interference to a second base station of a neighboring cell. The reason is mainly that when the preamble sent by the UE can be detected by the second base station, the preamble cannot be detected by the first base station, and the UE continues to increase a power of the preamble until an E-AI/AI (Enhanced-Acquisition Indicatior, enhanced-acquisition indicator) of the first base station is received or a maximum quantity of preamble sending times is reached. In this process, the preamble of the UE causes burst interference to the second base station, and the interference gradually increases until the UE completes transmission of a PRACH message. However, in intra-frequency networking of the HetNet, if the UE (Forward Access Channel, forward access channel) on a CELL_FACH can detect the second base station (LPN) of the neighboring cell but a cell reselection condition is not met, the UE can access the LPN in access to an uplink R99 RACH. Therefore, the second base station can deliver a response to the UE, so as to eliminate interference to the second base station by the preamble during random access of the UE at an edge of the first base station. Specifically, an RNC informs the second base station of a primary scrambling code, of an RACH preamble, broadcast in IE "PRACH info" or IE "PRACH preamble control parameters" of the first base station; after receiving and decoding the preamble of the UE of the first base station, the second base station sends an acquisition indication channel non-serving AICH to the UE, so that the UE accesses the second base station.

To make the objectives, technical solutions, and advantages of the present invention clearer, implementation manners of the present invention are further described in detail by using an R99 RACH as an example below and with reference to the accompanying drawings, and in actual applications, the present invention can also be applied to another release of a RACH.

### Embodiment 1

Referring to FIG. 2, this embodiment provides an interference control method for random access, including:
201: Acquire a primary scrambling code of a random access preamble broadcast by a radio network control device.
202: Acquire a random access preamble sent by user equipment UE.
203: Identify, according to the primary scrambling code of the broadcast random access preamble and the random access preamble that is sent by the UE, that the UE is UE that camps on a first base station that serves a neighboring cell.
204: Deliver an acquisition indication channel to the UE, to indicate whether the UE can perform uplink access.

In this embodiment, if a random access message sent by the UE is received, the method further includes:
forwarding the random access message to a radio network controller, so that the radio network controller controls the first base station to send a forward import access channel or a high-speed downlink shared channel to the UE.

The forwarding the random access message to a radio network controller includes:
identifying the random access message, and if the first base station is a sending target of the random access message, sending an uplink to the radio network controller according to the random access message.

Furthermore, the identifying the random access message includes:
performing distinguishing according to a scrambling code used in the random access message sent by the UE, and determining the sending target of the random access message sent by the UE; or
determining the sending target of the random access message according to indication information added to a control part of the random access message sent by the UE.

In a first scenario, before the acquiring a random access preamble sent by user equipment UE, the method further includes: receiving the random access preamble sent by the UE.

The delivering an acquisition indication channel to the UE, to indicate that the UE can perform uplink access includes:
sending the acquisition indication channel to the UE, where a slot format of the acquisition indication channel includes an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

In a second scenario, the acquiring a random access preamble sent by user equipment UE includes:
receiving the random access preamble sent by the UE; or
listening to a random access preamble sent by the UE to the first base station.

The delivering an acquisition indication channel to the UE, to indicate whether the UE can perform uplink access includes:
estimating a remaining resource; and
if there is a remaining resource, delivering the acquisition indication channel to the UE, where a slot structure of the acquisition indication channel includes an AI part, and a parameter value indicating whether to allow the UE to perform uplink access is set in the AI part.

Furthermore, the delivering the acquisition indication channel to the UE includes: performing sending repeatedly by utilizing the acquisition indication channel by using multiple slots or transmission time intervals to increase a correct reception probability of the UE.

In the foregoing method provided in this embodiment, an LPN delivers a non-serving AICH channel to the UE and instructs the UE to perform access, so that the UE can perform uplink access to the LPN; therefore, the UE no longer needs to receive an AICH of a first base station of the UE, and does not need to continue to send a preamble to the first base station, so that uplink interference to the LPN by random access of the UE is suppressed, an uplink throughput of the LPN is increased, and at the same time transmit power of the UE can also be saved.

### Embodiment 2

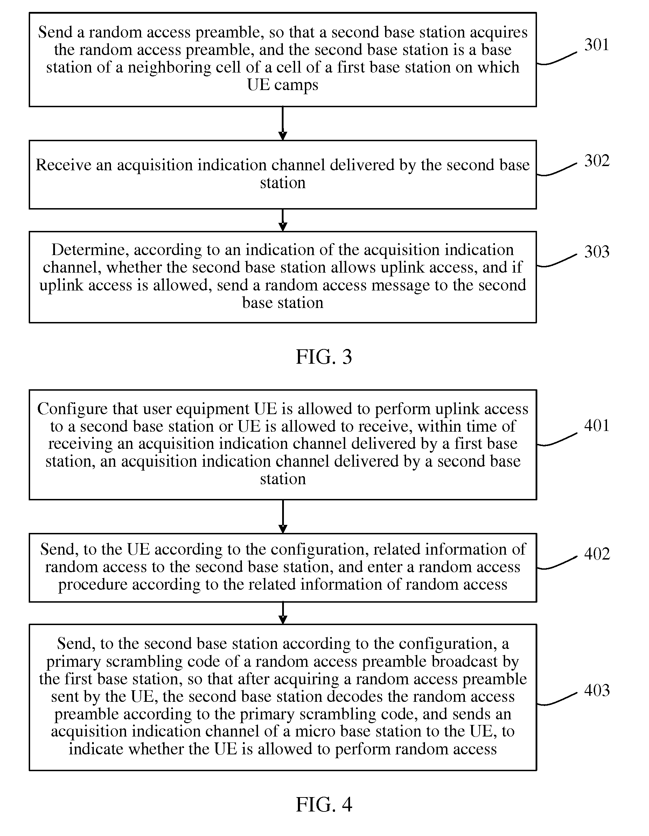

Referring to FIG. 3, this embodiment provides an interference control method for random access, including:
301: Send a random access preamble, so that a second base station acquires the random access preamble, where the second base station is a base station of a neighboring cell of a cell of a first base station on which the UE camps.
302: Receive an acquisition indication channel delivered by the second base station.
303: Determine, according to an indication of the acquisition indication channel delivered by the second base station, whether the second base station allows uplink access, and if uplink access is allowed, send a random access message to the second base station.

Specifically, the random access message is scrambled by using a scrambling code of the first base station or the second base station, so that when receiving the random access message, the second base station or the first base station identifies whether the random access message needs to be forwarded to the radio network controller; or
indication information is set in a control part of the random access message, so that when receiving the random access message, the second base station or the first base station identifies whether the random access message needs to be forwarded to the radio network controller.

A power of the random access message is determined according to a power of a preamble sent a latest time.

In a downlink, a forward import access channel or a high-speed downlink shared channel sent by the first base station is still received.

In a first scenario, before the sending a random access preamble, the method further includes:
receiving a preamble signature sequence, a scrambling code, and an acquisition indication channel code channel of the second base station that are broadcast by the radio network controller, and acquiring that a configuration of the first base station is that the UE is allowed to perform uplink access to the second base station; and
detecting that downlink channel quality of the second base station is greater than an uplink access threshold, where
the sending a random access preamble, so that a second base station of a neighboring cell acquires the random access preamble includes: sending the random access preamble to the second base station by using the broadcast preamble signature sequence and scrambling code of the second base station, so that the second base station decodes the random access preamble, and identifies, according to a signature sequence of the random access preamble, that the UE is UE that camps on the first base station, so as to deliver the acquisition indication channel to the UE.

The detecting that downlink channel quality of the second base station is greater than an uplink access threshold includes:
acquiring related parameters, where the related parameters include M__{new}, CIO_{new}, M_{best}, and R_{RACH}; and
determining, according to the related parameters, whether a formula 10logM__{new}+CIO_{new}≥10logM_{best}+R_{RACH} is true, and if the formula is true, confirming that it is detected that the downlink channel quality of the second base station is greater than the uplink access threshold, where
M__{new} is the downlink channel quality of the second base station;
M__{new} is one or a combination of more of the following second base station parameters: a common pilot channel received signal code power CPICH_RSCP, a chip power noise ratio Ec/N0, channel quality of a control channel, and channel quality of a synchronization channel;
CIO__{new} is a measurement value offset of a cell of the second base station;
M__{best} is channel quality of the cell of the first base station; and
R_{RACH} is a measurement report range.

In this scenario, the determining, according to an indication of the acquisition indication channel delivered by the second base station, whether the second base station allows uplink access includes:
detecting that a signature sequence of the acquisition indication channel delivered by the second base station corresponds to the signature sequence of the random access preamble, decoding the signature sequence of the acquisition indication channel, and determining, according to a decoding result, whether the second base station allows uplink access, where if the decoding result is 1, it indicates that the second base station allows uplink access, or otherwise, it indicates that the second base station does not allow uplink access.

Furthermore, the sending a random access message to the second base station includes:
sending the random access message to the second base station by using the scrambling code and a spreading code of the second base station, where the spreading code is agreed upon in advance or acquired through broadcasting.

In a second scenario, before the sending a random access preamble, the method further includes:
receiving a scrambling code and an acquisition indication channel code channel of the second base station that are broadcast by the radio network controller, and acquiring that a configuration of the first base station is that the UE is allowed to receive, within time of receiving an acquisition indication channel of the first base station, the acquisition indication channel delivered by the second base station; and
the sending a random access preamble includes: sending the random access preamble to the first base station or the second base station, so that the second base station listens and obtains the random access preamble.

In this scenario, the determining, according to an indication of the acquisition indication channel delivered by the second base station, whether the second base station allows uplink access includes:
detecting a parameter value that is set in an acquisition indicator AI part of the acquisition indication channel delivered by the second base station and that is used to indicate whether the UE is allowed to perform random access, and determining, according to the parameter value, whether the second base station allows uplink access.

Furthermore, before the sending a random access message to the second base station, the method further includes:
determining whether the acquisition indication channel of the first base station is received; and
if yes, sending the random access message to the first base station.

Specifically, the method provided in this embodiment is executed by the UE.

For the interference control method for random access provided in this embodiment, UE can perform uplink access to a second base station of a neighboring cell in an uplink or UE is allowed to receive, within time of receiving, an acquisition indication channel of a first base station, an acquisition indication channel of the second base station. When the acquisition indication channel indicates that the UE is allowed to perform uplink access, the UE can perform uplink access to an LPN, no longer needs to receive an AICH of the first base station of the UE, and does not need to continue sending a random access preamble to the first base station, so that uplink interference to the LPN by random access of the UE is suppressed, an uplink throughput of the LPN is increased, and at the same time transmit power of the UE can also be saved.

### Embodiment 3

Referring to FIG. 4, this embodiment provides an interference control method for random access, including:
401: Configure that user equipment UE is allowed to perform uplink access to a second base station or UE is allowed to receive, within time of receiving an acquisition indication channel delivered by a first base station, an acquisition indication channel delivered by a second base station, where the first base station is a base station on which the UE camps, and the second base station is a base station of a neighboring cell of a cell of the first base station.
402: Send, to the UE according to a configuration, related information of random access to the second base station, and enter a random access procedure according to the related information of random access.
403: Send, to the second base station according to the configuration, a primary scrambling code of a random access preamble broadcast by the first base station, so that after acquiring a random access preamble sent by the UE, the second base station decodes the random access preamble according to the primary scrambling code, and sends the acquisition indication channel to the UE, to indicate whether the UE is allowed to perform random access.

When the configuration is that the user equipment UE is allowed to perform random access to the second base station, the related information of random access includes: a preamble signature sequence, a scrambling code, and an acquisition indication channel code channel of the second base station, where the preamble signature sequence is different from a preamble signature sequence for random access of UE that camps on the second base station; or
when the configuration is that the UE is allowed to receive, within the time of receiving the acquisition indication channel delivered by the first base station, the acquisition indication channel delivered by the second base station, the related information of random access includes: a scrambling code and an acquisition indication channel code channel of the second base station.

Furthermore, the method further includes:
receiving a random access message forwarded by the second base station and/or the first base station; and
instructing, according to the random access message, the first base station to send a forward import access channel or a high-speed downlink shared channel to the UE.

Furthermore, after the receiving a random access message forwarded by the second base station and the first base station, the method further includes:
performing selective combination on the random access message.

Specifically, the method provided in this implementation is executed by an RNC.

In this embodiment, an RNC sets UE of a first base station to allow the UE to perform uplink access in an uplink to a second base station of a neighboring cell or allow the UE to receive, within time of receiving an acquisition indication channel of the first base station, an acquisition indication channel of the second base station, and broadcasts a primary scrambling code of a random access preamble to the second base station. Therefore, after acquiring a random access preamble sent by the UE and decoding the random access preamble, the second base station can send the acquisition indication channel to the UE. When the acquisition indication channel indicates that the UE is allowed to perform uplink access, the UE can perform uplink access to the second base station, no longer needs to receive an AICH of the first base station of the UE, and does not need to continue sending a random access preamble to the first base station, so that uplink interference to the second base station by random access of the UE is suppressed, an uplink throughput of the second base station is increased, and at the same time transmit power of the UE can also be saved.

### Embodiment 4

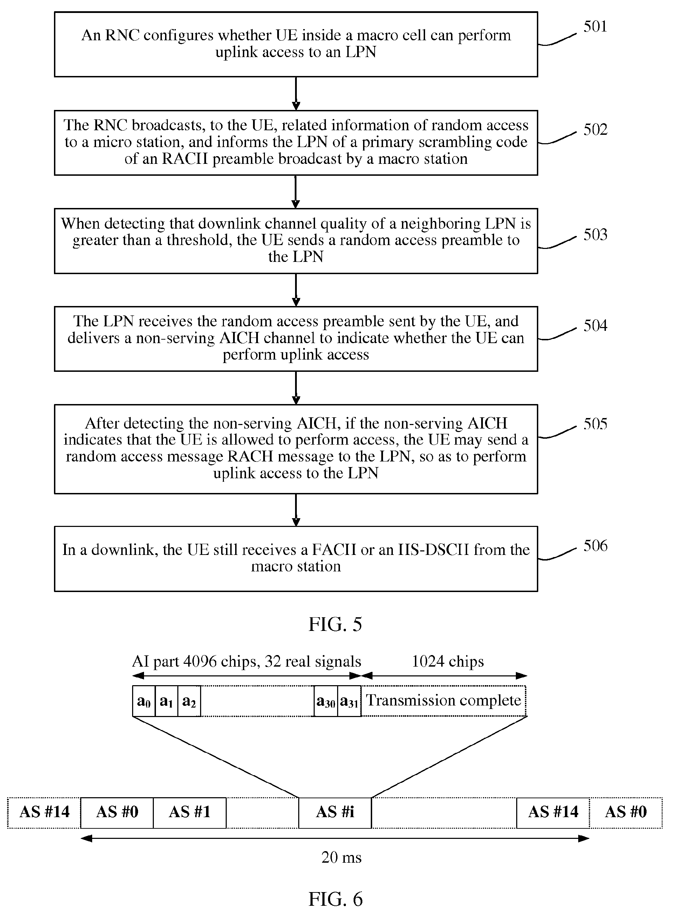

This embodiment of the present invention provides an interference control method for random access, which may be applied to an R99 RACH, or may be applied to another release of a RACH. Referring to FIG. 5, a procedure of the method includes:
501: An RNC configures whether UE inside a macro cell (or a macro station) can perform uplink access to an LPN at an R99 RACH.
502. If uplink access to the LPN is allowed, the RNC broadcasts, to the UE, related information of random access to the micro station, so that the UE acquires a configuration, and enters a random access procedure according to the related information of random access. At the same time, the RNC also informs the LPN of a primary scrambling code of an RACH preamble broadcast by the macro station.

Specifically, the related information of random access is a preamble signature (preamble signature) that allows UE to access the LPN, a scrambling code, and a non-serving AICH code channel of the LPN that are broadcast by the macro station in a (System Information Block, system information block) SIB5 or 5BIS.

Specifically, the preamble signature is different from a preamble signature of RACH access of UE in an LPN cell. The primary scrambling code of the RACH preamble broadcast by the macro station is a primary scrambling code of a preamble broadcast in IE "PRACH info" and IE "PRACH preamble control parameters".

503: When detecting that downlink channel quality of a neighboring LPN is greater than a threshold (that is, an uplink access threshold), the UE sends a random access preamble to the LPN.

Specifically, the UE sends the random access preamble, and performs uplink access to the LPN according to an R99 PRACH procedure by using a preamble signature and a scrambling code broadcast by the RNC. In this case, the UE no longer receives an AICH (Acquisition Indication Channel, acquisition indication channel) of a current cell (that is, the macro station where the UE is located).

Specifically, the detecting that downlink channel quality of the micro station is greater than an uplink access threshold includes:
acquiring related parameters; and
determining whether a formula 10logM__{new}+CIO_{new}≥10logM_{best}+R_{RACH} is true according to the related parameters, and if the formula is true, confirming that it is detected that the downlink channel quality of the micro station is greater than the uplink access threshold, where
10logM__{new} is the downlink channel quality, and
the related parameters include M__{new}, CIO_{new}, M_{best}, and R_{RACH}.

Herein M__{new} may be a CPICH_RSCP (common pilot channel received signal code power) or a CPICH Ec/N0 (chip power noise ratio) of a micro station of a neighboring cell, or may be channel quality of another control or synchronization channel of the neighboring cell, or is a quality combination of multiple control or synchronization channels. M__{best} is channel quality of the corresponding current cell.

R_{RACH} is a measurement report range, and CIO__{new} is a cell measurement value offset.

504: The LPN receives the random access preamble sent by the UE, decodes the random access preamble according to a primary scrambling code of the random access preamble broadcast by the macro station in a system information block, identifies, by using the preamble signature, that the UE is UE of the macro station, and then delivers a non-serving AICH channel to indicate whether the UE can perform uplink access.

Specifically, the non-serving AICH channel has the same format as a conventional AICH channel does, and includes an AI (Acquisition Indicatior, acquisition indicator) part, where the AI part uses a signature sequence corresponding to the preamble signature of random preamble sent by the UE. In this embodiment, for a format of each access slot (5120 chips) of the non-serving AICH, reference may be made to FIG. 6.

In FIG. 6, an AS (Access Slot) indicates one access slot, and first 4096 chips (that is, the AI part) of the access slot indicate one signature sequence signature. This signature sequence has a one-to-one correspondence to a signature sequence (that is, a preamble signature) of a preamble. If detecting that a signature sequence of a non-serving AICH (that is, the signature sequence of the AI part) corresponds to the signature sequence of the preamble sent by the UE, the UE may decode this sequence. If a value is 1, it indicates that uplink access can be performed; or otherwise, it indicates that currently uplink access cannot be performed.

505: After detecting the non-serving AICH of the LPN, if the non-serving AICH indicates that an ACK allows the UE to perform uplink access, the UE may send a random access message RACH message to the LPN by using the scrambling code and a spreading code of the LPN, so as to perform uplink access to the LPN.

Specifically, the spreading code may be agreed upon in advance or acquired by the UE through broadcasting. A power of the RACH message is determined according to a power of a preamble sent a latest time.

506: In a downlink, the UE still receives a related channel from the macro station.

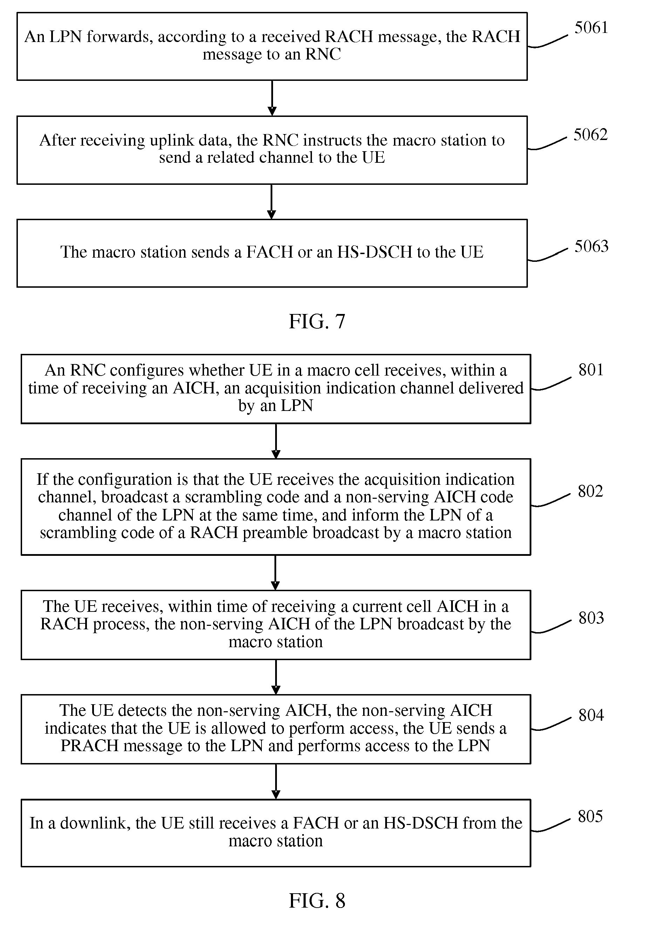

Referring to FIG. 7, step 506 specifically includes the following steps:
5061: The LPN forwards the RACH message to the RNC, that is, sends uplink data (uplink data) to the RNC according to the RACH message.
5062: After receiving the uplink data, the RNC sends downlink traffic (downlink traffic) to the macro station of the UE according to the uplink data, to instruct the macro station to send a related channel to the UE.
5063: The macro station sends a FACH or an HS-DSCH (High-Speed Downlink Shared Channel, high-speed downlink shared channel) to the UE.

In this embodiment, an RNC configures that UE in a macro cell is allowed to access an LPN of a neighboring cell, broadcasts a preamble signature (preamble signature) of an allowed LPN, a scrambling code, and a non-serving AICH code channel to the UE, and informs the LPN of a RACH scrambling code broadcast by a macro station. Therefore, when the UE detects that downlink channel quality of an LPN of a neighboring cell is greater than a threshold, an uplink access request may be sent to the LPN. As long as the LPN delivers a non-serving AICH channel to the UE and instructs the UE to perform access, the UE can perform uplink access to the LPN. Therefore, the UE no longer needs to receive an AICH of the macro station of the UE, and does not need to continue to send a preamble to the macro station, so that uplink interference to the LPN by random access of the UE is suppressed, an uplink throughput of the LPN is increased, and at the same time transmit power of the UE can also be saved.

### Embodiment 5

In this embodiment of the present invention, an R99 RACH is used as an example, and an interference control method for random access is provided. Referring to FIG. 8, a procedure of the method includes:
801: An RNC configures whether UE in a macro cell receives, within time of receiving an AICH, an acquisition indication channel non-serving AICH delivered by a micro station.
802: If a configuration is that the UE receives the acquisition indication channel, broadcast a scrambling code and a non-serving AICH code channel of an LPN to the UE, and inform the LPN of a primary scrambling code of a RACH preamble broadcast by a macro station.

Specifically, refer to 9 for a slot format of the non-serving AICH channel of the LPN.

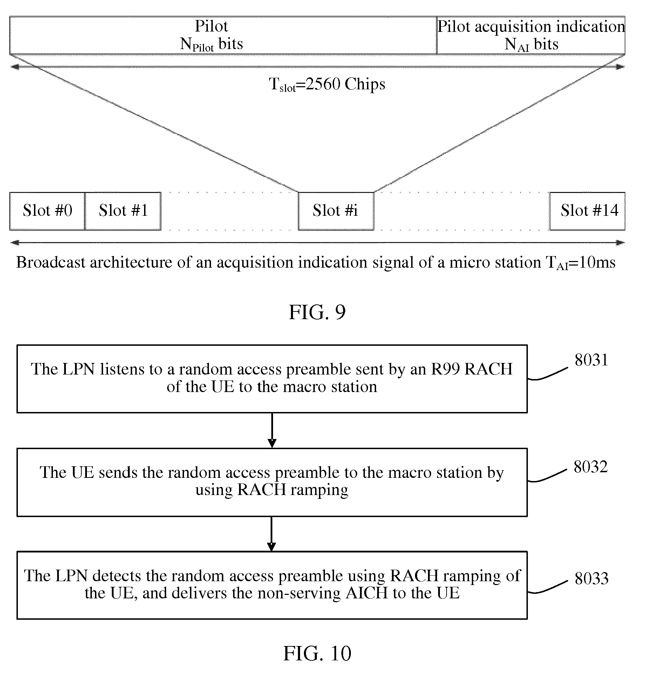

In FIG. 9, each slot includes a Pilot (pilot) part and an AI part: The pilot part is used for the UE to perform channel estimation on the non-serving AICH, and the AI is an access indication delivered by the LPN. The Non-serving AICH may be repeatedly sent by using multiple slots or TTIs (Transmission Time Interval, transmission time interval) to increase a correct reception probability of the UE.

803: The UE receives, within time of receiving a current cell AICH in a RACH process, the non-serving AICH of the LPN broadcast by the macro station.

Referring to FIG. 10, step 803 specifically includes the following steps:
8031: The LPN listens to a random access preamble sent by an R99 RACH of the UE to the macro station.
8032: The UE sends the random access preamble to the macro station by using RACH ramping.
8033: The LPN detects the random access preamble using RACH ramping of the UE, decodes the random access preamble according to a primary scrambling code of the random access preamble, identifies that the UE is UE of the macro station, and delivers the non-serving AICH to the UE.

Specifically, the UE performs RACH ramping access to the macro station. When the preamble sent by the UE can already be detected by the micro station, the preamble cannot be detected by the macro station.

If the LPN has a remaining R99 resource, the LPN sets, in an AI part of the non-serving AICH, one parameter pattern value for indicating whether to allow the UE to perform uplink access, to indicate whether the UE can perform uplink access.

804: The UE receives and detects a pattern of the AI part of the non-serving AICH, and if the UE is allowed to perform access, the UE sends a PRACH message random access message to the LPN at a suitable time.

Specifically, a power of the PRACH message is determined according to a power of a preamble sent by the UE a latest time.

805: In a downlink, the UE still receives a FACH or an HS-DSCH from the macro station.

Specifically, the following steps are included:
8051: The LPN forwards the received random access message, that is, sends uplink data (uplink data) to the RNC according to the received RACH message.
8052: The RNC receives the uplink data, and sends downlink traffic (downlink traffic) to the macro station of the UE according to the uplink data.
8053: The macro station sends the FACH or the HS-DSCH to the UE.

Specifically, in this embodiment, if the UE receives AICHs of the macro station and the LPN at the same time, the UE ignores the AICH of the LPN and sends a PRACH message to the macro station. In this case, the macro station forwards the PRACH message to the RNC.

To enable the macro station or the micro station to distinguish whether the UE RACH accesses a macro station or an LPN, several processing methods as follows may be used:
Method 1: Perform distinguishing according to a scrambling code used in a PRACH Message sent by the UE. If the scrambling code is a broadcast scrambling code of the macro station, it indicates that a macro station is accessed; and if the used scrambling code is a broadcast scrambling code of the LPN, it indicates that a micro station is accessed.
Method 2: Add 1 bit of indication information to a control part control part of a PRACH Message sent by the UE to indicate that a macro station or a micro station is accessed.

If the macro station or the LPN identifies that the RACH message of the UE is not sent to the macro station or the LPN, the macro station or the LPN does not forward the RACH message to the RNC.

In addition, access distinguishing may also be skipped, and the RNC performs selective combination on the RACH message by using a macro diversity manner.

In this embodiment, an RNC configures that UE in a macro cell is allowed to access an LPN of a neighboring cell, broadcasts, to the UE, a scrambling code of an allowed LPN and a non-serving AICH code channel, and informs the LPN of a primary scrambling code of a RACH preamble broadcast by the macro station, and then the LPN listens to a preamble sent by the UE to the macro station. When the LPN detects that a RACH preamble sent by the UE, if the LPN still has a remaining resource, the LPN sends a non-serving AICH to the UE, to instruct the UE to perform access. In this case, the UE does not need to continue to send a preamble to the macro station, so that uplink interference to the LPN by random access of the UE is suppressed, an uplink throughput of the LPN is increased, and at the same time transmit power of the UE can also be saved.

### Embodiment 6

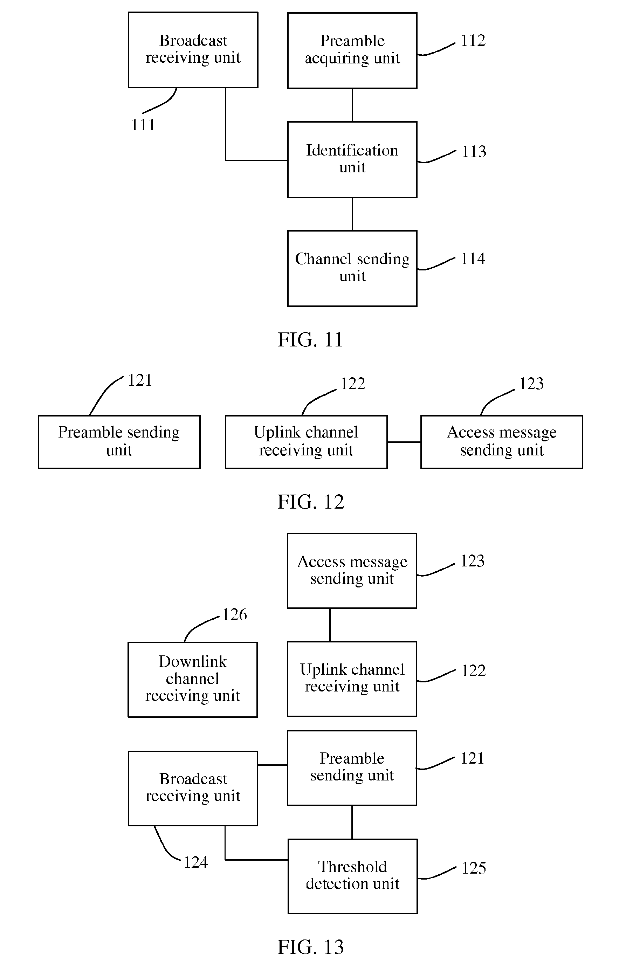

Referring to FIG. 11, this embodiment provides a base station, including:
a broadcast receiving unit 111, configured to acquire a primary scrambling code of a random access preamble broadcast by a radio network control device;
a preamble acquiring unit 112, configured to acquire a random access preamble sent by user equipment UE;
an identification unit 113, configured to identify, according to the primary scrambling code of the random access preamble received by the broadcast receiving unit 111, whether the UE is UE that camps on a first base station that serves a neighboring cell; and
a channel sending unit 114, configured to: when the identification unit 112 identifies that the UE is UE that camps on the first base station, deliver an acquisition indication channel to the UE, to indicate whether the UE can perform uplink access.

In a first scenario, the preamble acquiring unit 112 is configured to receive the random access preamble sent by the UE,
where a slot format of the acquisition indication channel sent by the channel sending unit 114 includes an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

In a second scenario, the preamble acquiring unit 112 is configured to listen to a random access preamble sent by the UE to the first base station.

The channel sending unit 114 includes:
a resource estimation module, configured to: after the preamble acquiring unit listens and obtains the random access preamble, estimate whether the base station has a remaining resource;
a channel processing module, configured to: when the resource estimation module estimates that the base station has a remaining resource, send the acquisition indication channel to the UE, where a slot of the acquisition indication channel includes an AI part and a pilot Pilot part, and a parameter value indicating whether the UE is allowed to perform random access is set in the AI part, so that when being allowed to perform random access, the UE sends a random access message, where the Pilot part is used for the UE to perform channel evaluation on the acquisition indication channel; or further configured to repeatedly send the acquisition indication channel by using multiple slots or transmission time intervals TTI, so as to increase a correct reception probability of the UE.

In any one of the foregoing scenarios, the base station may further include:
an access message receiving unit, configured to receive the random access message sent by the UE; and
a forwarding unit, configured to forward the random access message to a radio network controller, so that the radio network controller controls the first base station to send a related channel to the UE.

Furthermore, the forwarding unit is further configured to identify the random access message, and if the random access message is sent to the micro station, forward the random access message to the radio network controller.

For the foregoing first base station provided in this embodiment, a non-serving AICH channel is delivered to the UE and the UE is instructed to perform access, so that the UE can perform uplink access to the second base station. Therefore, the UE no longer needs to receive an AICH of the first base station of the UE, and does not need to continue to send a preamble to the first base station, so that uplink interference to the LPN by random access of the UE is suppressed, an uplink throughput of the LPN is increased, and at the same time transmit power of the UE can also be saved.

### Embodiment 7

Referring to FIG. 12, this embodiment provides user equipment UE, including:
a preamble sending unit 121, configured to send a random access preamble, so that a second base station acquires the random access preamble, where the second base station is a base station of a neighboring cell of a cell of a first base station on which the UE camps;
an uplink channel receiving unit 122, configured to receive an acquisition indication channel delivered by the second base station;
an access message sending unit 123, configured to determine, according to the channel received by the uplink channel receiving unit, whether the second base station allows uplink access, and if uplink access is allowed and only the acquisition indication channel is received, send a random access message to the second base station.

Referring to FIG. 13, in this embodiment, the UE further includes:
a broadcast receiving unit 124, configured to receive a preamble signature sequence, a scrambling code, and an acquisition indication channel code channel of the second base station that are broadcast by a radio network controller, and acquire that a configuration of the first base station is that the UE is allowed to perform uplink access to the second base station; and
a threshold detection unit 125, configured to: when the broadcast receiving unit 124 acquires that the configuration of the first base station is that the UE is allowed to perform uplink access to the second base station, detect whether downlink channel quality of the second base station is greater than an uplink access threshold, where
the preamble sending unit 121 is configured to: when the threshold detection unit 125 detects that the downlink channel quality of the second base station is greater than the uplink access threshold, send the random access preamble to the second base station by using the broadcast preamble signature and scrambling code of the second base station, so that the second base station decodes the random access preamble, and identifies, according to a signature sequence of the random access preamble, that the UE is UE that camps on a neighboring cell, so as to deliver the acquisition indication channel to the UE.

Furthermore, the access message sending unit 123 includes:
a channel analysis module, configured to detect the acquisition indication channel received by the uplink channel receiving unit, and when it is detected that a signature sequence of the acquisition indication channel corresponds to the signature sequence of the random access preamble, decode the signature sequence of the acquisition indication channel, where if a decoding value is 1, it indicates the second base station allows uplink access, or otherwise, it indicates that the second base station does not allow uplink access; and
a sending module, configured to: when the channel analysis module finds through analysis that the second base station allows uplink access, send the random access message to the second base station.

Furthermore, the user equipment UE in this embodiment further includes:
a downlink channel receiving unit 126, configured to receive a forward import access channel or a high-speed downlink shared channel sent by the first base station.

For the user equipment provided in this embodiment, when it is detected that downlink channel quality of a neighboring second base station is greater than a threshold, an uplink access request may be sent to the second base station. As long as the second base station delivers a non-serving AICH channel to the UE and instructs the UE to perform access, the UE can perform uplink access to the second base station. Therefore, the UE no longer needs to receive an AICH of a first base station of the UE, and does not need to continue to send a preamble to the first base station, so that uplink interference to the second base station by random access of the UE is suppressed, an uplink throughput of the second base station is increased, and at the same time transmit power of the UE can also be saved.

### Embodiment 8

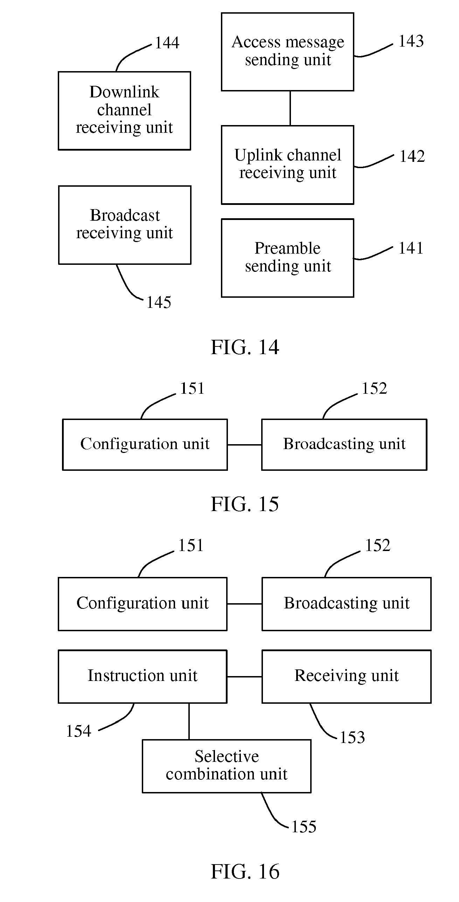

Referring to FIG. 14, this embodiment provides user equipment UE, including:
a preamble sending unit 141, configured to send a random access preamble, so that a second base station acquires the random access preamble, where the second base station is a base station of a neighboring cell of a cell of a first base station on which the UE camps;
an uplink channel receiving unit 142, configured to receive an acquisition indication channel delivered by the second base station;
an access message sending unit 143, configured to determine, according to the acquisition indication channel received by the uplink channel receiving unit, whether the second base station allows random access, and if random access is allowed and only the acquisition indication channel is received, send a random access message to the second base station.

In this embodiment, the UE further includes:
a broadcast receiving unit 144, configured to receive a scrambling code and an acquisition indication channel code channel of the second base station that are broadcast by a radio network controller, and acquire that a configuration of the first base station is that the UE is allowed to receive, within time of receiving an acquisition indication channel of the first base station, the acquisition indication channel delivered by the second base station, where
the preamble sending unit 141 is configured to send a random access preamble to the first base station or the second base station, so that the second base station of the neighboring cell acquires the random access preamble.

Furthermore, the access message sending unit 143 includes:
a channel analysis module, configured to detect a parameter value that is set in an acquisition indicator AI part of the acquisition indication channel received by the uplink channel receiving unit and that is used to indicate whether uplink access is allowed, and determine, according to the parameter value, whether the second base station allows uplink access; and
a sending module, configured to: when the channel analysis module finds through analysis that the second base station allows uplink access, send the random access message to the second base station.

Furthermore, in one scenario of this embodiment, the uplink channel receiving unit 142 is further configured to receive the acquisition indication channel delivered by the first base station.

The access message sending unit 143 is further configured to: when the uplink channel receiving unit 142 synchronously receives the acquisition indication channel delivered by the second base station and the acquisition indication channel delivered by the first base station, send the random access message to the first base station.

The access message sending unit 143 is further configured to scramble the random access message by using the scrambling code of the first base station or the second base station, so that when receiving the random access message, the second base station or the first base station identifies whether the random access message needs to be forwarded to the radio network controller; or further configured to set indication information in a control part of the random access message, so that when receiving the random access message, the second base station or the first base station identifies whether the random access message needs to be forwarded to the radio network controller.

Furthermore, the UE further includes:
a downlink channel receiving unit 145, configured to receive a forward import access channel or a high-speed downlink shared channel sent by the first base station.

For the user equipment provided in this embodiment, when the user equipment receives a non-serving AICH that is sent by a second base station and instructs the user equipment to perform access, the user equipment can perform uplink access to the second base station. Therefore, the user equipment does not need to continue to send a preamble to a first base station, so that uplink interference to the second base station by random access of the UE is suppressed, an uplink throughput of the second base station is increased, and at the same time transmit power of the UE can also be saved.

### Embodiment 9

Referring to FIG. 15, this embodiment provides a radio network control device RNC, including:
a configuration unit 151, configured to configure that user equipment UE is allowed to perform uplink access to a second base station of a neighboring cell, or configured to configure that UE is allowed to receive, within time of receiving an acquisition indication channel of a first base station, an acquisition indication channel of a second base station, where the first base station is a base station on which the UE camps, and the second base station is a base station of a neighboring cell of a cell of the first base station; and
a broadcasting unit 152, configured to broadcast, to the UE according to a configuration of the configuration unit 151, related information of random access to the second base station, so that the UE acquires the configuration, and enters a random access procedure according to the related information of random access; further configured to broadcast, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

Furthermore, when the configuration is that the user equipment UE of the first base station is allowed to perform random access to the second base station of the neighboring cell, the broadcasting unit 152 is configured to broadcast a preamble signature sequence, a scrambling code, and an acquisition indication channel code channel of the second base station to the UE, where the preamble signature sequence is different from a preamble signature sequence for random access of UE that camps on the second base station.

When the configuration is that the UE of the first base station is allowed to receive, within the time of receiving the acquisition indication channel of the first base station, the acquisition indication channel of the second base station, the broadcasting unit 152 is configured to broadcast a scrambling code and an acquisition indication channel code channel of the second base station to the UE.

Referring to FIG. 16, furthermore, the RNC further includes:
a receiving unit 153, configured to receive a random access message forwarded by the second base station and/or the first base station; and
an instruction unit 154, configured to instruct, according to the random access message, the first base station to send a forward import access channel or a high-speed downlink shared channel to the UE.

Furthermore, the RNC further includes:
a selective combination unit 155, configured to: when the receiving unit 153 receives the random access message forwarded by the second base station and the first base station, perform selective combination on the random access message received by the receiving unit.

For the RNC provided in this embodiment, UE of a first base station is set to allow the UE to perform uplink access in an uplink to a second base station of a neighboring cell or allow the UE to receive, within time of receiving an acquisition indication channel of the first base station, an acquisition indication channel of the second base station, and a primary scrambling code of a random access preamble is broadcast to the second base station. Therefore, the second base station can send the acquisition indication channel to the UE after acquiring and decoding a random access preamble sent by the UE. When the acquisition indication channel indicates that the UE is allowed to perform uplink access, the UE can perform uplink access to the second base station, no longer needs to receive an AICH of the first base station of the UE, and does not need to continue sending a random access preamble to the first base station, so that uplink interference to the second base station by random access of the UE is suppressed, an uplink throughput of the second base station is increased, and at the same time transmit power of the UE can also be saved.

### Embodiment 10

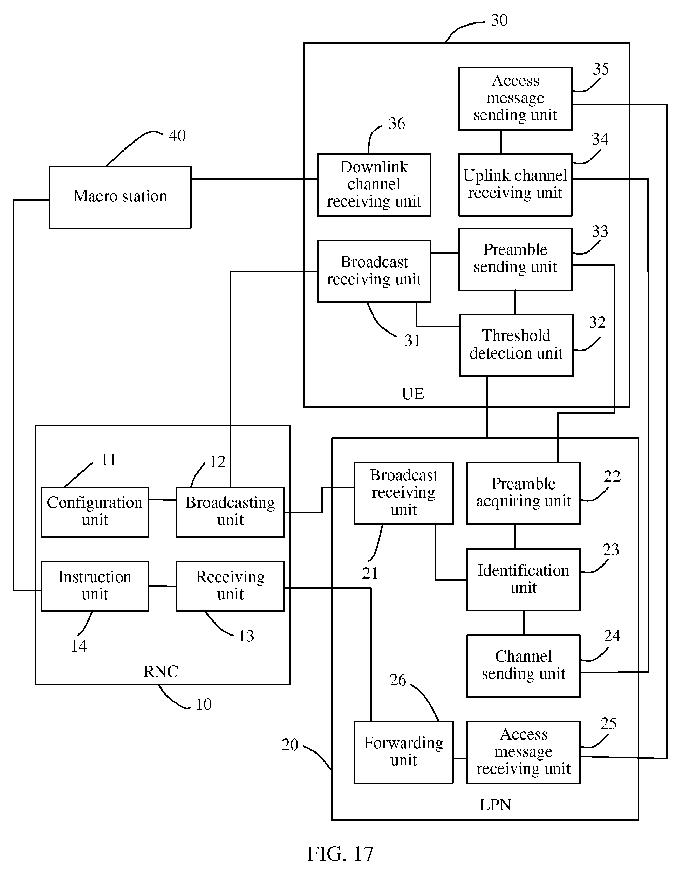

Referring to FIG. 17, this embodiment of the present invention provides a random access system.

In this implementation, the random access system includes a radio network control device 10, a second base station 20, user equipment UE 30, and a first base station 40, where the first base station 40 is a base station on which the UE 30 camps, and the second base station 20 is a base station of a neighboring cell of a cell of the first base station.

The radio network control device 10 includes:
a configuration unit 11, configured to configure that the UE 30 of the first base station 40 is allowed to perform random access to the second base station 20;
a broadcasting unit 12, configured to broadcast, to the UE 30 according to a configuration of the configuration unit 11, related information of random access to the second base station 20, where the related information includes a preamble signature sequence, a scrambling code, and an acquisition indication channel code channel of the second base station 20, so that the UE 30 acquires the configuration, and enters a random access procedure according to the related information of random access; and further configured to broadcast, to the second base station 20, a primary scrambling code of a random access preamble that are broadcast by the first base station 40, so that after acquiring a random access preamble sent by the UE 30, the second base station 20 decodes the random access preamble according to the primary scrambling code, and sends an acquisition indication channel to the UE 30, to indicate whether the UE 30 is allowed to perform uplink access;
a receiving unit 13, configured to receive a random access message forwarded by the second base station 20; and
an instruction unit 14, configured to instruct, according to the random access message 40, the first base station to send a forward import access channel or a high-speed downlink shared channel to the UE 30.

The second base station 20 includes:
a broadcast receiving unit 21, configured to acquire the primary scrambling code of the random access preamble broadcast by the first base station 40;
a preamble acquiring unit 22, configured to receive the random access preamble sent by the UE 30;
an identification unit 23, configured to identify, according to the primary scrambling code of the random access preamble received by the broadcast receiving unit 21 and the random access preamble received by the preamble acquiring unit 22, whether the UE 30 is UE that camps on the first base station 40; and
a channel sending unit 24, configured to: when the identification unit identifies that the UE is UE that camps on the first base station, deliver the acquisition indication channel to the UE 30, to indicate whether the UE 30 can perform uplink access, where specifically, a slot format of the acquisition indication channel includes an acquisition indicator AI part, and the AI part uses a signature sequence corresponding to a signature of the random access preamble sent by the UE 30, so that when detecting that the signature sequence of the AI part corresponds to the signature sequence of the random access preamble, the UE 30 decodes the signature sequence of the AI, and determines, according to a decoding result, whether uplink access is allowed, where if the decoding result is 1, the UE 30 is allowed to perform uplink access; or otherwise, the UE 30 is not allowed to perform uplink access;
an access message receiving unit 25, configured to receive the random access message sent by the UE 30; and
a forwarding unit 26, configured to forward the random access message to the radio network controller 10, so that the radio network controller 10 controls the first base station 40 to send a related channel to the UE 30.

The user equipment UE 30 includes:
a broadcast receiving unit 31, configured to receive related information, of random access to the second base station 20, broadcast by the radio network controller RNC 10, acquire that the configuration of the first base station is that the UE is allowed to perform uplink access to the second base station 20. Specifically, the related information includes a preamble signature sequence, a scrambling code, and the acquisition indication channel code channel of the second base station 20;
a threshold detection unit 32, configured to: when the broadcast receiving unit 31 acquires that the configuration of the first base station 40 is that the UE is allowed to perform uplink access to the second base station 20, detect whether downlink channel quality of the second base station 20 is greater than an uplink access threshold;
a preamble sending unit 33, configured to: when the threshold detection unit 32 detects that the downlink channel quality of the second base station 20 is greater than the uplink access threshold, send a random access preamble to the second base station 20 according to the broadcast preamble signature sequence and scrambling code of the second base station 20, so that the second base station 20 acquires the random access preamble; specifically, the preamble sending unit 22 sends the random access preamble to the second base station 20 by using the preamble signature and the scrambling code of the broadcast receiving unit 31 that are received by the second base station 20, so that the second base station 20 decodes the random access preamble according to the primary scrambling code of the broadcast random access preamble, and delivers the acquisition indication channel to the UE;
an uplink channel receiving unit 34, configured to receive the acquisition indication channel delivered by the second base station 20;
an access message sending unit 35, configured to determine, according to received by the uplink channel receiving unit, the second base station 20 whether uplink access is allowed, and if uplink access is allowed, send the random access message to the second base station 20. The access message sending unit includes: a channel analysis module, configured to detect the acquisition indication channel received by the uplink channel receiving unit, and when detecting that a sequence of the acquisition indication channel corresponds to a sequence of the random access preamble, decode the sequence of the acquisition indication channel, where if a decoding value is 1, it indicates that the second base station 20 allows uplink access; and a sending module, configured to: when the channel analysis module finds through analysis that the second base station 20 allows the UE 30 to perform uplink access, send the random access message to the second base station 20; and
a downlink channel receiving unit 36, configured to receive a forward import access channel or a high-speed downlink shared channel sent by the first base station 40.

The first base station 40 is configured to send, according to the indication of the radio network controller 10, the forward import access channel or the high-speed downlink shared channel to the UE 30.

In this embodiment, an RNC configures that UE in a serving cell is allowed to access a neighboring second base station, broadcasts an allowed preamble signature (preamble signature sequence), a scrambling code, and non-serving AICH code channel of the second base station to the UE, and informs the second base station of an RACH scrambling code broadcast by a first base station. Therefore, when the UE detects that downlink channel quality of a neighboring second base station is greater than a threshold, the UE can send an uplink access request to the second base station, and as long as the second base station delivers a non-serving AICH channel to the UE and instructs the UE to perform access, the UE can perform uplink access to the second base station. Therefore, the UE no longer needs to receive an AICH of a serving cell of the UE, and does not need to continue to send a preamble to the first base station, so that uplink interference to the second base station by random access of the UE is suppressed, an uplink throughput of the second base station is increased, and at the same time transmit power of the UE can also be saved.

### Embodiment 11

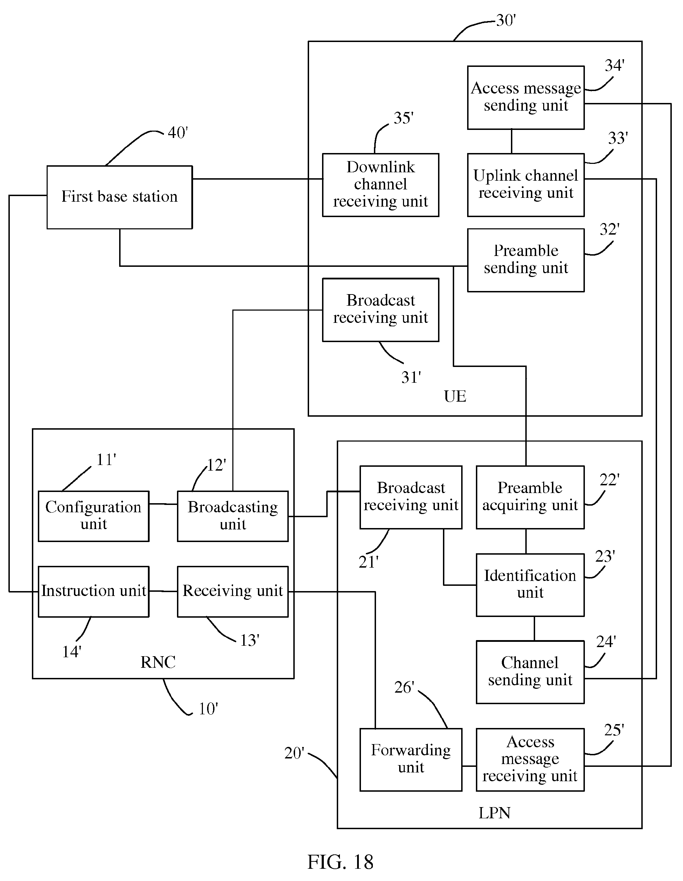

Referring to FIG. 18, this embodiment of the present invention provides a random access system.

In this implementation, the random access system includes a radio network control device RNC 10', a second base station 20', user equipment UE 30', and a first base station 40', where the first base station 40' is a base station on which the UE 30' camps, and the second base station 20' is a base station of a neighboring cell of a cell of the first base station 40'.

The radio network control device RNC 10' includes:
a configuration unit 11', configured to allow the UE of the first base station 30' to receive, within time of receiving an acquisition indication channel of the first base station 40', an acquisition indication channel of the second base station 20';
a broadcasting unit 12', configured to broadcast, to the UE 30' according to a configuration of the configuration unit, related information of random access to the second base station 20', so that the UE 30' acquires the configuration, and executes a random access procedure according to the related information of random access; and further configured to broadcast, to the second base station 20', a primary scrambling code of a random access preamble broadcast by the first base station 40', so that after acquiring a random access preamble sent by the UE 30', the second base station 20' decodes the random access preamble according to the primary scrambling code, and sends the acquisition indication channel to the UE 30', to indicate whether the UE 30' is allowed to perform uplink access, where specifically, the related information of random access to the second base station 20' includes a scrambling code and the acquisition indication channel of the second base station 20';
a receiving unit 13', configured to receive a random access message forwarded by the second base station 20'; and
an instruction unit 14', configured to instruct, according to the random access message 40', the first base station to send a forward import access channel or a high-speed downlink shared channel to the UE 30'.

The second base station 20' includes:
a broadcast receiving unit 21', configured to receive the primary scrambling code of the random access preamble broadcast in a system information block of the first base station 40';
a preamble acquiring unit 22', configured to acquire the random access preamble sent by the UE 30', where specifically, the random access preamble is obtained by the preamble acquiring unit 22' by listening to a random access preamble sent by the UE 30' to the first base station 40';
an identification unit 23', configured to identify, according to the primary scrambling code of the random access preamble received by the broadcast receiving unit 21' and the random access preamble acquired by the preamble acquiring unit 22', whether the UE 30' is UE that camps on the first base station 40';
a channel sending unit 24', configured to: when the identification unit 23' identifies that the UE 30' is UE that camps on the first base station 40', deliver the acquisition indication channel to the UE 30', to indicate whether the UE 30' can perform random access, where the channel sending unit 24' includes: a resource estimation module, configured to: after the preamble acquiring unit listens and obtains the random access preamble, estimate whether the second base station 20' has a remaining resource; and a channel processing module, configured to: when the resource estimation module estimates that the second base station 20' has a remaining resource, send an acquisition indication channel code channel to the UE 30', where a slot of the acquisition indication channel includes an AI part and a pilot Pilot part, a parameter value indicating whether to allow the UE 30' to perform uplink access is set in the AI part, so that when being allowed to perform uplink access, the UE 30' sends the random access message, and the Pilot part is used for the UE 30' to perform channel evaluation by the acquisition indication channel; or further configured to repeatedly send the acquisition indication channel by using multiple slots or transmission time intervals TTI, so as to increase a correct reception probability of the UE;
an access message receiving unit 25', configured to receive the random access message sent by the UE 30'; and
a forwarding unit 26', configured to forward the random access message to the radio network controller 10', so that the radio network controller 10' controls the first base station 40' to send a related channel to the UE 30'.

The UE 30' includes:
a broadcast receiving unit 31', configured to receive the scrambling code and the acquisition indication channel code channel of the second base station 20' that are broadcast by the radio network controller 10', and acquire that the configuration of the first base station 40' is that the UE 30' is allowed to receive, within time of receiving the acquisition indication channel of the first base station 40', the indication channel of the second base station 20';
a preamble sending unit 32', configured to send a random access preamble, so that the second base station 20' acquires the random access preamble, where specifically, the preamble sending unit 32' sends the random access preamble to the first base station 40' of the UE 30', so that the second base station 20' listens and obtains the random access preamble;
an uplink channel receiving unit 33', configured to receive the acquisition indication channel delivered by the second base station 20'; and
an access message sending unit 34', configured to determine, according to the acquisition indication channel, whether the second base station 20' allows uplink access, and if uplink access is allowed and only the acquisition indication channel is received, send the random access message to the base station 20'. The access message sending unit 34' includes: a channel analysis module, configured to detect a parameter value that is set in an acquisition indicator AI part of the acquisition indication channel and that indicates whether to allow the UE 30' to perform uplink access, and determine, according to the parameter value, whether the base station 20' allows uplink access; and a sending module, configured to: when the channel analysis module finds through analysis that the second base station 20' allows the user equipment to perform uplink access, send the random access message to the base station 20'; and
a downlink channel receiving unit 35', configured to receive a forward import access channel or a high-speed downlink shared channel sent by the first base station 40'.

The first base station 40' is configured to send, according to the indication of the radio network controller 10', the forward import access channel or the high-speed downlink shared channel to the UE 30'.

It should be noted that: The uplink channel receiving unit 33' of the UE 30' is further configured to receive the acquisition indication channel delivered by the first base station 40'; and the access message sending unit 34' is further configured to: when the uplink channel receiving unit 33' at the same time receives the acquisition indication channel delivered by the second base station 20' and the acquisition indication channel delivered by the first base station 40', ignore the acquisition indication channel delivered by the second base station 20', and forward the random access message to the first base station 40'. In this case, the first base station 40' is further configured to forward the random access message to the RNC 10'. The receiving unit 13' of the RNC is further configured to receive the random access message forwarded by the first base station; and the instruction unit 14' is still configured to instruct, according to the random access message 40' forwarded by the first base station 40', the first base station to send the forward import access channel or the high-speed downlink shared channel to the UE.

Specifically, to enable the second base station 20' to distinguish whether the random access message received by the second base station 20' is forwarded to the second base station 20', the forwarding unit of the second base station 20' is further configured to identify the random access message, and if the random access message is sent to the second base station 20', forward the random access message to the radio network controller. Specifically, distinguishing may be performed according to the scrambling code used in the random access message sent by the UE to determine whether the random access message sent by the UE is sent to the second base station 20'; or it may be determined according to indication information added to a control part of the random access message sent by the UE whether the random access message is sent to the second base station 20'. Similarly, the first base station 40' is further configured to identify the random access message, and if the random access message is sent to the first base station 40', forward the random access message to the radio network controller. A distinguishing method for the first base station 40' is the same as the distinguishing method for the second base station 20', and details are no longer described herein.

Specifically, the second base station 20' and the first base station 40' may also skip distinguishing of the received random access message, and instead, directly forward the random access message to the RNC. In this case, the RNC further includes a selective combination unit, configured to perform, by using a macro diversity manner, selective combination on the random access message received by the receiving unit.

In this embodiment, an RNC configures that UE in a serving cell is allowed to access a second base station, broadcasts an allowed scrambling code and a non-serving AICH code channel of the second base station to the UE, and informs the second base station of a RACH scrambling code broadcast by a first base station. The second base station listens to a preamble sent by the UE to the first base station, and when the second base station detects a preamble sent by the UE, if the UE still has a remaining resource, the LPN sends a non-serving AICH to the UE, to instruct the UE to perform access. In this case, the UE does not need to continue to send a preamble to the first base station, so that uplink interference to the second base station by random access of the UE is suppressed, an uplink throughput of the second base station is increased, and at the same time transmit power of the UE can also be saved.

### Embodiment 12

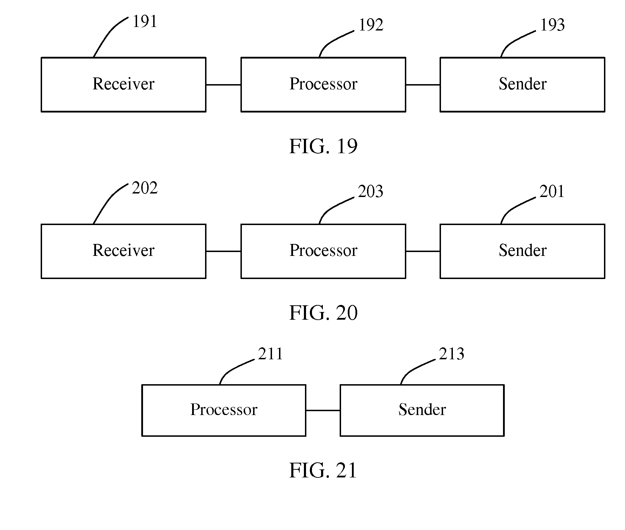

Referring to FIG. 19, this embodiment provides a base station, including:
a receiver 191, configured to acquire a primary scrambling code of a random access preamble broadcast by a radio network control device and a random access preamble sent by user equipment UE;
a processor 192, configured to perform decoding according to the primary scrambling code of the random access preamble and the random access preamble that are received by the receiver 191, and identify whether the UE is UE that camps on a first base station that serves a neighboring cell; and
a sender 193, configured to: when the processor 192 identifies that the UE is UE that camps on the first base station, deliver an acquisition indication channel to the UE, to indicate whether the UE can perform uplink access.

In this embodiment, in a first scenario, the receiver 191 is configured to receive the random access preamble sent by the UE,
where a slot format of the acquisition indication channel sent by the sender 193 includes an acquisition indicator AI part, and the AI part uses a signature sequence corresponding to a signature of the random access preamble sent by the UE, so that when detecting that the signature sequence of the AI corresponds to the signature sequence of the random access preamble, the UE decodes the signature sequence of the AI, and determines, according to a decoding result, whether uplink access is allowed, where if the decoding result is 1, the UE is allowed to perform uplink access, so that the UE sends a random access message, or otherwise, the UE is not allowed to perform uplink access.

In a second scenario, the receiver 191 is configured to listen to a random access preamble sent by the UE to the first base station;
the processor 192 is configured to: when the receiver 191 listens and obtains the random access preamble, estimate whether the base station has a remaining resource; and
the sender 193 is configured to: when the processor 192 estimates that the base station has a remaining resource, send the acquisition indication channel to the UE, where a slot of the acquisition indication channel includes an AI part and a pilot Pilot part, a parameter value indicating whether to allow the UE to perform uplink access is set in the AI part, so that when being allowed to perform uplink access, the UE sends the random access message, where the Pilot part is used for the UE to perform channel evaluation on the acquisition indication channel; or further configured to repeatedly send the acquisition indication channel by using multiple slots or transmission time intervals TTI, so as to increase a correct reception probability of the UE.

In any one of the foregoing scenarios, the receiver 191 is further configured to receive the random access message sent by the UE; and
the sender 193 is further configured to forward the random access message to the radio network controller, so that the radio network controller controls the first base station to send a related channel to the UE.

Furthermore, the processor 192 is further configured to identify the random access message; and
the sender is configured to: when the processor 192 identifies that the random access message is sent to the base station, forward the random access message to the radio network controller.

For the base station provided in this embodiment, a non-serving AICH channel is delivered to the UE and the UE is instructed to perform access, the UE can perform uplink access to the second base station. Therefore, the UE no longer needs to receive an AICH of a first base station of the UE, and does not need to continue to send a preamble to the first base station, so that uplink interference to the second base station by random access of the UE is suppressed, an uplink throughput of the second base station is increased, and at the same time transmit power of the UE can also be saved.

### Embodiment 13

Referring to FIG. 20, this embodiment provides user equipment UE, including:
a sender 201, configured to send a random access preamble, so that a second base station acquires the random access preamble, where the second base station is a base station of a neighboring cell of a cell of a first base station on which the UE camps;
a receiver 202, configured to receive an acquisition indication channel delivered by the second base station; and
a processor 203, further configured to determine, according to the acquisition indication channel, whether the second base station allows uplink access, where
the sender 201 is further configured to: when the processor determines that the second base station allows uplink access, send a random access message to the second base station.

In this embodiment, in a first scenario,
the receiver 202 is further configured to receive a preamble signature sequence, a scrambling code, and an acquisition indication channel code channel of the second base station that are broadcast by a radio network controller;
the processor 203 is further configured to acquire, according to the preamble signature sequence, the scrambling code, and the acquisition indication channel code channel of the second base station that are received by the receiver, that a configuration of the first base station is that the UE is allowed to perform uplink access to the second base station; and configured to: when the receiver acquires that the configuration of the first base station is that the UE is allowed to perform uplink access to the second base station, detect whether downlink channel quality of the second base station is greater than an uplink access threshold; and
the sender 201 is further configured to: when the processor 203 detects that the downlink channel quality of the second base station is greater than the uplink access threshold, send the random access preamble to the second base station by using the broadcast preamble signature sequence and scrambling code of the second base station, so that the second base station decodes the random access preamble, and identifies, according to a signature sequence of the random access preamble, that the UE is UE that camps on a neighboring cell, so as to deliver the acquisition indication channel to the UE.

Furthermore, the processor 203 is further configured to: when it is detected that a signature sequence of the acquisition indication channel corresponds to the signature sequence of the random access preamble, decode the signature sequence of the acquisition indication channel, and determine, according to a decoding result, whether the second base station allows uplink access; and the sender 201 is further configured to: when the processor 203 determines that the second base station allows uplink access, send the random access message to the second base station.

In a second scenario, the receiver 202 is configured to receive the scrambling code and an acquisition indication channel code channel of the second base station that are broadcast by the radio network controller.

The processor 203 is further configured to acquire, according to the scrambling code and the acquisition indication channel code channel of the second base station that are broadcast by the radio network controller and that are received by the receiver, that the configuration of the first base station is that the UE is allowed to receive, within time of receiving an acquisition indication channel of the first base station, the acquisition indication channel delivered by the second base station.

The sender 201 is configured to send a random access preamble to the first base station or the second base station of the UE, so that the second base station of the neighboring cell acquires the random access preamble.

Furthermore, the processor 203 is further configured to detect a parameter value that is set in an acquisition indicator AI part of the acquisition indication channel delivered by the second base station and that is used to indicate whether uplink access is allowed, and determine, according to the parameter value, whether the second base station allows uplink access; and
the sender 201 is further configured to: when the processor 203 determines that the second base station allows uplink access, send the random access message to the second base station.

Furthermore, the receiver 202 is further configured to receive the acquisition indication channel delivered by the first base station;
the processor 203 is further configured to: when the receiver receives the acquisition indication channel delivered by the second base station, determine whether the acquisition indication channel of the first base station is received;

When the processor 203 determines that the receiver receives the acquisition indication channel of the first base station, the sender 201 sends the random access message to the first base station.

Furthermore, the sender 201 is further configured to scramble the random access message by using the scrambling code of the first base station or the second base station, so that when receiving the random access message, the second base station or the first base station identifies whether the random access message needs to be forwarded to the radio network controller; or further configured to set indication information in a control part of the random access message, so that when receiving the random access message, the second base station or the first base station identifies whether the random access message needs to be forwarded to the radio network controller.

In this embodiment, in any one of the foregoing scenarios, the receiver 202 is further configured to receive a forward import access channel or a high-speed downlink shared channel sent by the first base station.

For the user equipment provided in this embodiment, uplink access may be performed to a second base station of a neighboring cell in an uplink or the UE may be allowed to receive, within time of receiving an acquisition indication channel of a first base station, an acquisition indication channel of a second base station. When the acquisition indication channel indicates that the UE is allowed to perform uplink access, the UE can perform uplink access to the second base station, no longer needs to receive an AICH of the first base station of the UE, and does not need to continue sending a random access preamble to the first base station, so that uplink interference to the second base station by random access of the UE is suppressed, an uplink throughput of the second base station is increased, and at the same time transmit power of the UE can also be saved.

### Embodiment 14

Referring to FIG. 21, this embodiment provides a radio network control device RNC, including:
a processor 211, configured to configure that user equipment UE of a first base station is allowed to perform uplink access to a second base station of a neighboring cell, or configured to configure that UE of the first base station is allowed to receive, within time of receiving an acquisition indication channel of the first base station, an acquisition indication channel of a second base station, where the first base station is a base station on which the UE camps, and the second base station is a base station of a neighboring cell of a cell of the first base station; and
a sender 212, configured to broadcast, to the UE according to a configuration of the processor 211, related information of random access to the second base station, so that the UE acquires the configuration, and enters a random access procedure according to the related information of random access; and further configured to broadcast, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

Furthermore, the sender 211 is configured to: when the configuration is that the user equipment UE of the first base station is allowed to perform random access to the second base station of the neighboring cell, broadcast a preamble signature sequence, a scrambling code, and an acquisition indication channel code channel of the second base station to the UE, where the preamble signature sequence is different from a preamble signature sequence for random access of UE that camps on the second base station; or when the configuration is that the UE of the first base station is allowed to receive, within the time of receiving the acquisition indication channel of the first base station, the acquisition indication channel of the second base station, broadcast the scrambling code and the acquisition indication channel code channel of the second base station to the UE.

Furthermore, the RNC further includes a receiver, configured to receive a random access message forwarded by the second base station and/or the first base station, where
the sender 212 is further configured to instruct, according to the random access message, the first base station to send a forward import access channel or a high-speed downlink shared channel to the UE.

Furthermore, the processor 211 is further configured to: when the receiver receives the random access message forwarded by the second base station and the first base station, perform selective combination on the random access message received by the receiver.

For the RNC provided in this embodiment, UE of a first base station is set, so that the UE is allowed to perform uplink access in an uplink to a second base station of a neighboring cell or the UE is allowed to receive, within time of receiving an acquisition indication channel of the first base station, an acquisition indication channel of a second base station, and a primary scrambling code of a random access preamble is broadcast to the second base station. Therefore, after acquiring and decoding a random access preamble sent by the UE, the second base station can send the acquisition indication channel to the UE. When the acquisition indication channel indicates that the UE is allowed to perform uplink access, the UE can perform uplink access to the second base station, no longer needs to receive an AICH of the first base station of the UE, and does not need to continue sending a random access preamble to the first base station, so that uplink interference to the second base station by random access of the UE is suppressed, an uplink throughput of the second base station is increased, and at the same time transmit power of the UE can also be saved.

In conclusion, for the interference control method for random access, device, and system in the embodiments of the present invention, UE of a first base station is set, and the UE is allowed to perform uplink access in an uplink to a second base station of a neighboring cell or the UE is allowed to receive, within time of receiving an acquisition indication channel of the first base station, an acquisition indication channel of a second base station, and a primary scrambling code of a random access preamble is broadcast to the second base station. Therefore, after acquiring and decoding a random access preamble sent by the UE, the second base station can send the acquisition indication channel to the UE. When the acquisition indication channel indicates that the UE is allowed to perform uplink access, the UE can perform uplink access to the second base station, no longer needs to receive an AICH of the first base station of the UE, and does not need to continue sending a random access preamble to the first base station, so that uplink interference to the second base station by random access of the UE is suppressed, an uplink throughput of the second base station is increased, and at the same time transmit power of the UE can also be saved.

It should be noted that when the interference control device for random access provided in the foregoing embodiments executes a random access procedure, the foregoing division of functional modules is only used as an example for description. In actual applications, the foregoing functions may be allocated to be accomplished by different functional modules according to needs, that is, the internal structure of the device is divided into different functional modules to accomplish all or some of the functions described above. In addition, the interference control method for random access, device, and system provided in the foregoing embodiments share the same concept, and reference may be made to the method embodiments for the specific implementation processes of the interference control method for random access, device, and system, which are no longer elaborated herein.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. An interference control method for random access, wherein the method comprises:
acquiring a primary scrambling code of a random access preamble broadcast by a radio network control device;
acquiring a random access preamble sent by user equipment UE;
identifying, according to the primary scrambling code of the broadcast random access preamble and the random access preamble that is sent by the UE, that the UE is UE that camps on a first base station that serves a neighboring cellfirst base station that serves a neighboring cell; and
delivering an acquisition indication channel to the UE, to indicate whether the UE can perform uplink access.

2. The method according to claim 1, before the acquiring a random access preamble sent by user equipment UE, further comprising: receiving the random access preamble sent by the UE.

3. The method according to claim 2, wherein the delivering an acquisition indication channel to the UE, to indicate that the UE can perform uplink access comprises:
sending the acquisition indication channel to the UE, wherein a slot format of the acquisition indication channel comprises an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

4. The method according to claim 1, before the acquiring a random access preamble sent by user equipment UE, further comprising:
receiving the random access preamble sent by the UE; or
listening to a random access preamble sent by the UE to the first base station.

5. The method according to claim 4, wherein the delivering an acquisition indication channel to the UE, to indicate whether the UE can perform uplink access comprises:
estimating a remaining resource; and
if there is a remaining resource, delivering the acquisition indication channel to the UE, wherein a slot structure of the acquisition indication channel comprises an AI part, and a parameter value indicating whether to allow the UE to perform uplink access is set in the AI part.

6. The method according to any one of claims 1 to 5, wherein the delivering an acquisition indication channel to the UE comprises repeatedly sending the acquisition indication channel by using multiple slots or transmission time intervals.

7. The method according to any one of claims 1 to 6, further comprising:
receiving a random access message sent by the UE; and
forwarding the random access message to a radio network controller, so that the radio network controller controls the first base station to send a forward import access channel or a high-speed downlink shared channel to the UE.

8. The method according to claim 7, wherein the forwarding the random access message to a radio network controller comprises:
identifying the random access message, and if the first base station is a sending target of the random access message, sending an uplink to the radio network controller according to the random access message.

9. The method according to claim 8, wherein the identifying the random access message comprises:
performing distinguishing according to a scrambling code used in the random access message sent by the UE, and determining the sending target of the random access message sent by the UE; or
determining whether the first base station is the sending target of the random access message according to indication information of a control part of the random access message sent by the UE.

10. An interference control method for random access, wherein the method comprises:
sending a random access preamble, so that a second base station acquires the random access preamble, wherein the second base station is a base station of a neighboring cell of a cell of a first base station on which the UE camps;
receiving an acquisition indication channel delivered by the second base station; and
determining, according to an indication of the acquisition indication channel delivered by the second base station, whether the second base station allows uplink access, and if uplink access is allowed, sending a random access message to the second base station.

11. The method according to claim 10, before the sending a random access preamble, further comprising:
receiving a preamble signature sequence, a scrambling code, and an acquisition indication channel code channel of the second base station that are broadcast by a radio network controller, and acquiring that a configuration of the first base station is that the UE is allowed to perform uplink access to the second base station; and
detecting that downlink channel quality of the second base station is greater than an uplink access threshold; and
the sending a random access preamble, so that a second base station acquires the random access preamble comprises: sending the random access preamble to the second base station by using the broadcast preamble signature sequence and scrambling code of the second base station, so that the second base station decodes the random access preamble, and identifies, according to the random access preamble, that the UE is UE that camps on a neighboring cell, so as to deliver the acquisition indication channel to the UE.

12. The method according to claim 11, the detecting that downlink channel quality of the second base station is greater than an uplink access threshold comprises:
acquiring related parameters, wherein the related parameters comprise M__{new}, CIO_{new}, M_{best}, and R_{RACH}; and
determining, according to the related parameters, whether a formula 10logM_{_new}+CIO_{new}≥10logM_{best}+R_{RACH} is true, and if the formula is true, confirming that it is detected that the downlink channel quality of the second base station is greater than the uplink access threshold, wherein
M__{new} is the downlink channel quality of the second base station;
M__{new} is one or a combination of more of the following second base station parameters: a common pilot channel received signal code power CPICH_RSCP, a chip power noise ratio Ec/N0, channel quality of a control channel, and channel quality of a synchronization channel;
CIO__{new} is a measurement value offset of a cell of the second base station;
M__{best} is channel quality of the cell of the first base station; and
R_{RACH} is a measurement report range.

13. The method according to any one of claims 10 to 12, wherein the determining, according to an indication of the acquisition indication channel delivered by the second base station, whether the second base station allows uplink access comprises:
detecting that a signature sequence of the acquisition indication channel delivered by the second base station corresponds to the signature sequence of the random access preamble, decoding the signature sequence of the acquisition indication channel, and determining, according to a decoding result, whether the second base station allows uplink access.

14. The method according to any one of claims 10 to 13, wherein the sending a random access message to the second base station comprises:
sending the random access message to the second base station by using the scrambling code and a spreading code of the second base station, wherein the spreading code is agreed upon in advance or acquired through broadcasting.

15. The method according to claim 10, before the sending a random access preamble, further comprising:
receiving a scrambling code and an acquisition indication channel code channel of the second base station that are broadcast by a radio network controller, acquiring that a configuration of the first base station is that the UE is allowed to receive, within time of receiving an acquisition indication channel of the first base station, the acquisition indication channel delivered by the second base station;
the sending a random access preamble comprises: sending a random access preamble to the first base station or the second base station, so that the second base station acquires the random access preamble.

16. The method according to claim 15, wherein the determining, according to an indication of the acquisition indication channel delivered by the second base station, whether the second base station allows uplink access comprises:
detecting a parameter value that is set in an acquisition indicator AI part of the acquisition indication channel delivered by the second base station and that is used to indicate whether the UE is allowed to perform random access, and determining, according to the parameter value, whether the second base station allows uplink access.

17. The method according to claim 15 or 16, before the sending a random access message to the second base station, further comprising:
determining whether the acquisition indication channel of the first base station is received; and
if yes, sending the random access message to the first base station.

18. The method according to any one of claims 10 to 17, further comprising:
receiving a forward import access channel or a high-speed downlink shared channel sent by the first base station.

19. The method according to any one of claims 10 to 18, wherein
the random access message is scrambled by using the scrambling code of the first base station or the second base station, so that when receiving the random access message, the second base station or the first base station identifies whether the random access message needs to be forwarded to the radio network controller; or
indication information is set in a control part of the random access message, so that when receiving the random access message, a neighboring cell base station or the first base station identifies whether the random access message needs to be forwarded to the radio network controller.

20. An interference control method for random access, wherein the method comprises:
configuring that user equipment UE is allowed to perform uplink access to a second base station or UE is allowed to receive, within time of receiving an acquisition indication channel delivered by a first base station, an acquisition indication channel delivered by a second base station, wherein the first base station is a base station on which the UE camps, and the second base station is a base station of a neighboring cell of a cell of the first base station;
broadcasting, to the UE according to a configuration, related information of random access to the second base station, so that the UE enters a random access procedure according to the related information of random access; and
sending, to the second base station according to the configuration, a primary scrambling code and a broadcast random access preamble of the first base station, so that after acquiring a random access preamble sent by the UE, the second base station sends the acquisition indication channel to the UE, to indicate whether the UE is allowed to perform random access.

21. The method according to claim 20, wherein when the configuration is that the user equipment UE is allowed to perform random access to the second base station, the related information of random access comprises: a preamble signature sequence, a scrambling code, and an acquisition indication channel code channel of the second base station, wherein the preamble signature sequence is different from a preamble signature sequence for random access of UE that camps on the second base station; or
when the configuration is that the UE is allowed to receive, within the time of receiving the acquisition indication channel delivered by the first base station, the acquisition indication channel delivered by the second base station, the related information of random access comprises: a scrambling code and an acquisition indication channel code channel of the second base station.

22. The method according to claim 20 or 21, further comprising:
receiving a random access message forwarded by the second base station and/or the first base station; and
instructing the first base station to send a forward import access channel or a high-speed downlink shared channel to the UE.

23. The method according to claim 22, after the receiving a random access message forwarded by the second base station and the first base station, further comprising:
performing selective combination on the random access message.

24. A base station, comprising:
a broadcast receiving unit, configured to acquire a primary scrambling code of a random access preamble broadcast by a radio network control device;
a preamble acquiring unit, configured to acquire a random access preamble sent by user equipment UE;
an identification unit, configured to identify, according to the primary scrambling code of the broadcast random access preamble and the random access preamble that is sent by the UE, whether the UE is UE that camps on a first base station that serves a neighboring cellfirst base station that serves a neighboring cell; and
a channel sending unit, configured to: when the identification unit identifies that the UE is UE that camps on the first base station, deliver an acquisition indication channel to the UE, to indicate whether the UE can perform uplink access.

25. The base station according to claim 24, wherein
the preamble acquiring unit is configured to receive the random access preamble sent by the UE, wherein
a slot format of the acquisition indication channel sent by the channel sending unit comprises an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

26. The base station according to claim 24, wherein the preamble acquiring unit is configured to listen to a random access preamble sent by the UE to the first base station;
and the channel sending unit comprises:
a resource estimation module, configured to: after the preamble acquiring unit listens and obtains the random access preamble, estimate whether the base station has a remaining resource; and
a channel processing module, configured to: when the resource estimation module estimates that the base station has a remaining resource, send the acquisition indication channel to the UE, wherein a slot of the acquisition indication channel comprises an AI part and a pilot Pilot part, and a parameter value indicating whether the UE is allowed to perform random access is set in the AI part, so that when being allowed to perform random access, the UE sends a random access message, wherein the Pilot part is used for the UE to perform channel evaluation on the acquisition indication channel; or further configured to repeatedly send the acquisition indication channel by using multiple slots or transmission time intervals TTI.

27. The base station according to any one of claims 24 to 26, further comprising:
an access message receiving unit, configured to receive the random access message sent by the UE; and
a forwarding unit, configured to forward the random access message to a radio network controller, so that the radio network controller controls the first base station to send a related channel to the UE.

28. The base station according to claim 27, wherein
the forwarding unit is further configured to identify the random access message, and if the random access message is sent to the base station, forward the random access message to the radio network controller.

29. User equipment, comprising:
a preamble sending unit, configured to send a random access preamble, so that a second base station acquires the random access preamble, wherein the second base station is a base station of a neighboring cell of a cell of a first base station on which the UE camps;
an uplink channel receiving unit, configured to receive an acquisition indication channel delivered by the second base station; and
an access message sending unit, configured to determine, according to the acquisition indication channel received by the uplink channel receiving unit, whether the second base station allows uplink access, and if uplink access is allowed, send a random access message to the second base station.

30. The user equipment according to claim 29, further comprising:
a broadcast receiving unit, configured to receive a preamble signature sequence, a scrambling code, and an acquisition indication channel code channel of the second base station that are broadcast by a radio network controller, and acquire that a configuration of the first base station of the UE is that the UE is allowed to perform uplink access to the second base station; and
a threshold detection unit, configured to: when the broadcast receiving unit acquires that the configuration of the first base station is that the UE is allowed to perform uplink access to the second base station, detect whether downlink channel quality of the second base station is greater than an uplink access threshold, wherein
the preamble sending unit is configured to: when the threshold detection unit detects that the downlink channel quality of the second base station is greater than the uplink access threshold, send the random access preamble to the second base station according to the preamble signature sequence and the scrambling code that are broadcast by the second base station, so that the second base station decodes the random access preamble, and identifies, according to a signature sequence of the random access preamble, that the UE is UE that camps on a neighboring cell, so as to deliver the acquisition indication channel to the UE.

31. The user equipment according to claim 29 or 30, wherein the access message sending unit comprises:
a channel analysis module, configured to detect the acquisition indication channel received by the uplink channel receiving unit, when it is detected that a signature sequence of the acquisition indication channel corresponds to the signature sequence of the random access preamble sent by the preamble sending unit, decode the signature sequence of the acquisition indication channel, and determine, according to a decoding result, whether the second base station allows uplink access; and
a sending module, configured to: when the channel analysis module determines that the second base station allows uplink access, send the random access message to the second base station.

32. The user equipment according to claim 29, further comprising:
a broadcast receiving unit, configured to receive a scrambling code and an acquisition indication channel code channel of the second base station that are broadcast by a radio network controller, and acquire that a configuration of the first base station is that the UE is allowed to receive, within time of receiving an acquisition indication channel of the first base station, the acquisition indication channel delivered by the second base station, wherein
the preamble sending unit is configured to send the random access preamble to the first base station or the second base station, so that the second base station acquires the random access preamble.

33. The user equipment according to claim 32, wherein the access message sending unit comprises:
a channel analysis module, configured to detect a parameter value that is set in an acquisition indicator AI part of the acquisition indication channel received by the uplink channel receiving unit and that is used to indicate whether uplink access is allowed, and determine, according to the parameter value, whether the second base station allows uplink access; and
a sending module, configured to: when the channel analysis module determines that the second base station allows uplink access, send the random access message to the second base station.

34. The user equipment according to claim 32 or 33, wherein
the uplink channel receiving unit is further configured to receive the acquisition indication channel delivered by the first base station; and
the access message sending unit is further configured to: when the uplink channel receiving unit synchronously receives the acquisition indication channel delivered by the second base station and the acquisition indication channel delivered by the first base station, send the random access message to the first base station.

35. The user equipment according to any one of claims 29 to 34, wherein
the access message sending unit is further configured to scramble the random access message by using the scrambling code of the first base station or the second base station, so that when receiving the random access message, the second base station or the first base station identifies whether the random access message needs to be forwarded to the radio network controller; or further configured to set indication information in a control part of the random access message, so that when receiving the random access message, the second base station or the first base station identifies whether the random access message needs to be forwarded to the radio network controller.

36. The user equipment according to any one of claims 29 to 35, further comprising:
a downlink channel receiving unit, configured to receive a forward import access channel or a high-speed downlink shared channel sent by the first base station.

37. A radio network control device, comprising:
a configuration unit, configured to configure that user equipment UE is allowed to perform uplink access to a second base station, or configured to configure that UE is allowed to receive, within time of receiving an acquisition indication channel delivered by the first base station, an acquisition indication channel delivered by a second base station, wherein the first base station is a base station on which the UE camps, and the second base station is a base station of a neighboring cell of a cell of the first base station; and
a broadcasting unit, configured to broadcast, to the UE according to a configuration of the configuration unit, related information of random access to the second base station, so that the UE acquires the configuration, and enters a random access procedure according to the related information of random access; and further configured to send, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

38. The radio network control device according to claim 37, wherein
when the configuration is that the user equipment UE of the first base station is allowed to perform random access to the second base station, the broadcasting unit is configured to broadcast a preamble signature sequence, a scrambling code, and an acquisition indication channel code channel of the second base station to the UE, wherein the preamble signature sequence is different from a preamble signature sequence for random access of UE that camps on the second base station; or
when the configuration is that the UE is allowed to receive, within the time of receiving the acquisition indication channel of the first base station, the acquisition indication channel delivered by the second base station, the broadcasting unit is configured to broadcast a scrambling code and an acquisition indication channel code channel of the second base station to the UE.

39. The radio network control device according to claim 37 or 38, further comprising:
a receiving unit, configured to receive a random access message forwarded by the second base station and/or the first base station; and
an instruction unit, configured to instruct, according to the random access message, the first base station to send a forward import access channel or a high-speed downlink shared channel to the UE.

40. The radio network control device according to claim 39, further comprising:
a selective combination unit, configured to: when the receiving unit receives the random access message forwarded by the second base station and the first base station, perform selective combination on the random access message received by the receiving unit.

41. A random access system, comprising:
the base station according to any one of claims 24 to 28;
the user equipment UE that camps on a base station of a neighboring cell of a cell of the base station according to any one of claims 29 to 36; and
the radio network controller according to any one of claims 37 to 40, wherein
the base station on which the UE camps is configured to send the forward import access channel or the high-speed downlink shared channel to the UE according to an indication of the radio network controller.

42. Abase station, comprising:
a receiver, configured to acquire a primary scrambling code of a random access preamble broadcast by a radio network control device and a random access preamble that is sent by user equipment UE;
a processor, configured to identify, according to the primary scrambling code of the broadcast random access preamble and the random access preamble that is sent by the UE, whether the UE is UE that camps on a first base station that serves a neighboring cellfirst base station that serves a neighboring cell; and
a sender, configured to: when the processor identifies that the UE is UE that camps on the first base station, deliver an acquisition indication channel to the UE, to indicate whether the UE can perform uplink access.

43. The base station according to claim 42, wherein
the receiver is configured to receive the random access preamble sent by the UE,
wherein a slot format of the acquisition indication channel sent by the sender comprises an acquisition indicator AI part, and the AI part uses a signature sequence corresponding to a signature sequence of the random access preamble sent by the UE, so that when detecting that the signature sequence of the AI corresponds to the signature sequence of the random access preamble, the UE decodes the signature sequence of the AI, and determines, according to a decoding result, whether uplink access is allowed.

44. The base station according to claim 42, wherein
the receiver is configured to listen to a random access preamble sent by the UE to the first base station;
the processor is configured to: after the receiver listens and obtains the random access preamble, estimate whether the base station has a remaining resource; and
the sender is further configured to: when the processor estimates that the base station has a remaining resource, send the acquisition indication channel to the UE, wherein a slot of the acquisition indication channel comprises an AI part and a pilot Pilot part, and a parameter value indicating whether to allow the UE to perform uplink access is set in the AI part, so that when being allowed to perform uplink access, the UE sends a random access message, and the Pilot part is used for the UE to perform channel evaluation on the acquisition indication channel; or further configured to repeatedly send the acquisition indication channel by using multiple slots or transmission time intervals TTI, so as to increase a correct reception probability of the UE.

45. The base station according to any one of claims 42 to 44, wherein
the receiver is further configured to receive the random access message sent by the UE; and the sender is further configured to forward the random access message to a radio network controller, so that the radio network controller controls the first base station to send a related channel to the UE.

46. The base station according to claim 45, wherein
the processor is further configured to identify the random access message; and
the sender is further configured to: when the processor identifies that the random access message is sent to the base station, forward the random access message to the radio network controller.

47. User equipment, comprising:
a sender, configured to send a random access preamble, so that a second base station acquires the random access preamble, wherein the second base station is a base station of a neighboring cell of a cell of a first base station on which the UE camps;
a receiver, configured to receive an acquisition indication channel delivered by the second base station; and
a processor, configured to determine, according to the acquisition indication channel received by the receiver, whether the second base station allows uplink access, wherein
the sender is further configured to: when the processor determines that the second base station allows uplink access, send a random access message to the second base station.

48. The user equipment according to claim 47, wherein
the receiver is configured to receive a preamble signature sequence, a scrambling code, and an acquisition indication channel code channel of the second base station that are broadcast by a radio network controller;
the processor is further configured to acquire, according to the preamble signature sequence, the scrambling code, and the acquisition indication channel code channel of the second base station that are received by the receiver, that a configuration of the first base station is that the UE is allowed to perform uplink access to the second base station; and configured to: when it is acquired that the configuration of the first base station is that the UE is allowed to perform uplink access to the second base station, detect whether downlink channel quality of the second base station is greater than an uplink access threshold; and
the sender is configured to: when the processor detects that the downlink channel quality of the second base station is greater than the uplink access threshold, send the random access preamble to the second base station by using the broadcast preamble signature sequence and scrambling code of the second base station, so that the second base station decodes the random access preamble, and identifies, according to a signature sequence of the random access preamble, that the UE is UE that camps on a neighboring cell, so as to deliver the acquisition indication channel to the UE.

49. The user equipment according to claim 47 or 48, wherein the processor is further configured to: when it is detected that a signature sequence of the acquisition indication channel corresponds to the signature sequence of the random access preamble, decode the signature sequence of the acquisition indication channel, and determine, according to a decoding result, whether the second base station allows uplink access; and
the sender is further configured to: when the processor determines that the second base station allows uplink access, send the random access message to the second base station.

50. The user equipment according to claim 47, wherein
the receiver is configured to receive a scrambling code and an acquisition indication channel code channel of the second base station that are broadcast by a radio network controller;
the processor is further configured to acquire, according to the scrambling code and the acquisition indication channel code channel of the second base station that are broadcast by the radio network controller and that are received by the receiver, that a configuration of the first base station is that the UE is allowed to receive, within time of receiving an acquisition indication channel of the first base station, the acquisition indication channel delivered by the second base station; and
the sender is configured to send a random access preamble to the first base station or the second base station, so that the second base station acquires the random access preamble.

51. The user equipment according to claim 50, wherein
the processor is further configured to detect a parameter value that is set in an acquisition indicator AI part of the acquisition indication channel delivered by the second base station and that is used to indicate whether uplink access is allowed, and determine, according to the parameter value, whether the second base station allows uplink access; and
the sender is further configured to: when the processor determines that the second base station allows uplink access, send the random access message to the second base station.

52. The user equipment according to claim 50 or 51, wherein
the receiver is further configured to receive the acquisition indication channel delivered by the first base station;
the processor is further configured to: when the receiver receives the acquisition indication channel delivered by the second base station, determine whether the acquisition indication channel of the first base station is received; and
the sender, when the processor determines that the receiver receives the acquisition indication channel of the first base station, sends the random access message to the first base station.

53. The user equipment according to any one of claims 47 to 52, wherein
the sender is further configured to scramble the random access message by using the scrambling code of the first base station or the second base station, so that when receiving the random access message, the second base station or the first base station identifies whether the random access message needs to be forwarded to the radio network controller; or further configured to set indication information in a control part of the random access message, so that when receiving the random access message, the second base station or the first base station identifies whether the random access message needs to be forwarded to the radio network controller.

54. The user equipment according to any one of claims 47 to 53, wherein the receiver is further configured to receive a forward import access channel or a high-speed downlink shared channel sent by the first base station.

55. A radio network control device, comprising:
a processor, configured to configure that user equipment UE is allowed to perform uplink access to a second base station, or configured to configure that UE is allowed to receive, within time of receiving an acquisition indication channel delivered by a first base station, an acquisition indication channel delivered by a second base station, wherein the first base station is a base station on which the UE camps, and the second base station is a base station of a neighboring cell of a cell of the first base station; and
a sender, configured to broadcast, to the UE according to a configuration of the processor, related information of random access to the second base station, so that the UE acquires the configuration, and enters a random access procedure according to the related information of random access; and further configured to send, to the second base station, a primary scrambling code of a random access preamble broadcast by the first base station, so that after acquiring a random access preamble sent by the UE, the second base station decodes the random access preamble according to the primary scrambling code, and sends the acquisition indication channel to the UE.

56. The radio network control device according to claim 55, wherein
the sender is configured to: when the configuration is that the user equipment UE is allowed to perform random access to the second base station, broadcast a preamble signature sequence, a scrambling code, and an acquisition indication channel code channel of the second base station to the UE, wherein the preamble signature sequence is different from a preamble signature sequence for random access of UE that camps on the second base station; or
the sender is configured to: when the configuration is that the UE of the first base station is allowed to receive, within the time of receiving the acquisition indication channel of the first base station, the acquisition indication channel of the second base station, broadcast a scrambling code and an acquisition indication channel code channel of the second base station to the UE.

57. The radio network control device according to claim 55 or 56, further comprising a receiver, wherein
the receiver is configured to receive a random access message forwarded by the second base station and/or the first base station; and
the sender is further configured to instruct, according to the random access message, the first base station to send a forward import access channel or a high-speed downlink shared channel to the UE.

58. The radio network control device according to claim 57, wherein
the processor is further configured to: when the receiver receives the random access message forwarded by the second base station and the first base station, perform selective combination on the random access message received by the receiver.
